(19) **Europäisches Patentamt**
**European Patent Office**
**Office européen des brevets**

(11) **EP 3 601 397 B1**

(12) **EUROPÄISCHE PATENTSCHRIFT**

(45) Veröffentlichungstag und Bekanntmachung des Hinweises auf die Patenterteilung:
**03.03.2021   Patentblatt 2021/09**

(21) Anmeldenummer: **18711962.3**

(22) Anmeldetag: **23.03.2018**

(51) Int Cl.:
*C08G 18/48* (2006.01)          *C08G 18/50* (2006.01)
*C08G 18/76* (2006.01)          *C08J 9/14* (2006.01)
*C08G 18/66* (2006.01)

(86) Internationale Anmeldenummer:
**PCT/EP2018/057479**

(87) Internationale Veröffentlichungsnummer:
**WO 2018/177941 (04.10.2018 Gazette 2018/40)**

(54) **POLYOLKOMPONENTEN UND IHRE VERWENDUNG ZUR HERSTELLUNG VON POLYURETHAN-HARTSCHAUMSTOFFEN**

POLYOL COMPONENTS AND USE OF SAME FOR PRODUCING POLYURETHANE RIGID FOAM MATERIALS

COMPOSÉS DE POLYOL ET SON UTILISATION POUR LA FABRICATION DE MOUSSES RIGIDES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2017   EP 17163074**

(43) Veröffentlichungstag der Anmeldung:
**05.02.2020   Patentblatt 2020/06**

(73) Patentinhaber: **BASF SE**
**67056 Ludwigshafen am Rhein (DE)**

(72) Erfinder:
• **ZARBAKHSH, Sirus**
  **67056 Ludwigshafen (DE)**
• **KLASSEN, Johann**
  **49448 Lemfoerde (DE)**
• **ELBING, Mark**
  **23627 Groß Groenau (DE)**

(56) Entgegenhaltungen:
**EP-A1- 1 138 709          WO-A1-2006/042674**
**WO-A1-2010/084058          WO-A1-2011/039082**
**WO-A2-2006/037540          WO-A2-2012/119970**

**Beschreibung**

Die Erfindung betrifft eine Polyolkomponente P), ein Verfahren zur Herstellung von Polyurethan-Hartschaumstoffen unter Verwendung der Polyolkomponente P) sowie Polyurethan-Hartschaumstoffe selbst.

Polyurethan(PU)-Hartschaumstoffe können in bekannter Weise durch Umsetzung von organischen Polyisocyanaten mit einer oder mehreren Verbindungen mit mindestens zwei reaktiven Wasserstoffatomen, vorzugsweise Polyether- und/oder Polyesteralkohole (Polyole), in Gegenwart von Treibmitteln, Katalysatoren und gegebenenfalls Hilfsmitteln und/oder Zusatzstoffen hergestellt werden.

Üblicherweise werden zur Herstellung von PU-Hartschaumstoffen auf Isocyanatbasis Polyole mit hohen Funktionalitäten und niedrigem Molekulargewicht verwendet, um eine optimale Vernetzung der Schäume zu gewährleisten. Die vorzugsweise eingesetzten Polyetheralkohole haben zumeist eine Funktionalität von 4 bis 8 und eine Hydroxylzahl im Bereich zwischen 300 bis 600, insbesondere zwischen 400 und 500 mg KOH/g. Es ist bekannt, dass Polyole mit sehr hoher Funktionalität und Hydroxylzahlen im Bereich zwischen 300 und 600 mg KOH/g eine sehr hohe Viskosität aufweisen. Weiterhin ist bekannt, dass derartige Polyole vergleichsweise polar sind und somit ein schlechtes Lösungsvermögen für übliche Treibmittel, insbesondere Kohlenwasserstoffe wie Pentane, insbesondere Cyclopentan, aufweisen. Um diesen Mangel zu beheben, werden der Polyolkomponente häufig Polyetheralkohole mit Funktionalitäten von 2 bis 4 und Hydroxylzahlen von 100 bis 250 mg KOH/g zugesetzt.

Außerdem ist bekannt, dass bei Verwendung von Polyolkomponenten auf Basis hochfunktioneller, polarer Polyole die Fließfähigkeit (ausgedrückt durch den Fließfaktor FF = Mindestfülldichte/Freigeschäumte Dichte der Reaktionsmischung aus Isocyanat und Polyetheralkohol) nicht immer zufriedenstellend ist. Aus EP-A 1 138 709 ist aber bekannt, dass Reaktionsmischungen aus Isocyanat und Polyol mit einer guten Fließfähigkeit hergestellt werden können, wenn die Polyolkomponente mindestens einen Polyetheralkohol mit einer Hydroxylzahl von 100 bis 250 mg KOH/g enthält, der durch Anlagerung von Alkylenoxiden an H-funktionelle Starterverbindungen mit zwei bis vier aktiven Wasserstoffatomen, insbesondere Glykole, Trimethylolpropan, Glycerin, Pentaerythrit oder vic-Toluylendiamin (vic-TDA), hergestellt wurde.

EP 2 563 833 B1 beschreibt ein Verfahren zur Herstellung von Polyurethanen, vorzugsweise von Polyurethan-Schaumstoffen, insbesondere von Polyurethan-Hartschaumstoffen, durch Umsetzung von a) Polyisocyanaten mit b) Verbindungen mit mindestens zwei mit Isocyanatgruppen reaktiven Wasserstoffatomen, dadurch gekennzeichnet, dass die Verbindungen mit mindestens zwei mit Isocyanatgruppen reaktiven Wasserstoffatomen b) mindestens einen Polyetheralkohol b1) enthalten, der durch Umsetzung eines aromatischen Amins b1a) mit Propylenoxid unter Verwendung eines von b1a) verschiedenen Amins b1b) als Katalysator hergestellt wurde, wobei als Alkylenoxid zur Herstellung des Polyetheralkohols b1) neben Propylenoxid 0 bis 10 Gew.-% bezogen auf das Gewicht der Alkylenoxide Ethylenoxid eingesetzt wird. Dadurch sollen Polyurethan-Schaumstoffe unter Verwendung von Polyolen bereitgestellt werden, die eine niedrige Viskosität der flüssigen Ausgangskomponente sowie gute Verarbeitungseigenschaften aufweisen.

WO 2011/134866 A2 beschreibt ein Verfahren zur Herstellung von Polyetheralkoholen durch Anlagerung von Alkylenoxiden an H-funktionelle Starterverbindungen, insbesondere an aromatische Amine. Es war die Aufgabe in der WO 2011/134866 A2, Polyetheralkohole auf Basis von aromatischen Aminen, insbesondere von TDA, zu entwickeln, bei deren Herstellung im Wesentlichen ausschließlich Propylenoxid als Alkylenoxid eingesetzt wird. Insbesondere sollten diese Polyetheralkohole eine niedrige Viskosität und einen geringen Gehalt an nicht umgesetzten als Starterverbindungen eingesetzten aromatischen Aminen enthalten. Überraschenderweise wurde gefunden, dass durch den Einsatz von Aminkatalysatoren Polyole auf Basis von aromatischen Aminen, insbesondere TDA, erhalten werden, die eine geringe Viskosität aufweisen und nur Propylenoxid als Alkylenoxid enthalten. Gemäß den Beispielen wurde Imidazol als Aminkatalysator verwendet.

Werden PU-Hartschaumstoffe im Kältegerätebereich verwendet, ist das Entformverhalten wichtig. Gutes Entformverhalten zeichnet sich beispielsweise dadurch aus, dass eine möglichst niedrige Nachexpansion des ausgehärteten PU-Hartschaums auftritt. Dies wird durch den Stand der Technik noch nicht ausreichend gewährleistet.

Aufgabe der vorliegenden Erfindung ist es hochfunktionelle Polyole, insbesondere Zuckerpolyole, bereitzustellen, um Polyurethan-Hartschaumsysteme zu generieren, die verbesserte Eigenschaften aufweisen. Insbesondere sollen mit den hochfunktionellen Polyolen verbesserte Entformeigenschaften und somit eine geringe Nachexpansion bei der Herstellung der Polyurethan-Hartschäume erzielt werden.

Die Aufgabe wird gelöst durch eine Polyolkomponente P), umfassend:

a) mindestens ein Polyetherpolyol A) mit einer OH-Zahl im Bereich von 300 bis 500 mg KOH/g, umfassend Einheiten basierend auf Gemischen mit einer Funktionalität im Bereich von 5,7 bis 6,4 aus den Monomeren ai), aii) und aiii) jeweils ausgewählt aus den Gruppen bestehend aus

ai) Saccharose,
aii) Monopropylenglykol, Diethylenglykol, Triethylenglykol, Dipropylenglykol, Glycerin oder Mischungen daraus,

aiii) ausschließlich Propylenoxid als Alkylenoxid,

b) mindestens ein Polyetherpolyol B) mit einer OH-Zahl im Bereich von 300 bis 500 mg KOH/g, umfassend Einheiten basierend auf Gemischen mit einer Funktionalität im Bereich von 3,0 bis 5,0 aus den Monomeren bi) und bii) jeweils ausgewählt aus den Gruppen bestehend aus

bi) 2,3-, 3,4-, 2,4-, 2,5-, 2,6-Toluylendiamin oder Mischungen daraus,
bii) ausschließlich Propylenoxid als Alkylenoxid,

c) mindestens ein Polyetherpolyol C) mit einer OH-Zahl im Bereich von 100 bis 290 mg KOH/g, umfassend Einheiten basierend auf Gemischen mit einer Funktionalität im Bereich von 3,0 bis 5,0 oder 2,8 bis 3,0 aus den Monomeren ci) und cii) jeweils ausgewählt aus den Gruppen bestehend aus

ci) Aminen, umfassend Ethylendiamin, 1,3-Propylendiamin, 1,3-, 1,4-Butylendiamin, 1,2-, 1,3-, 1,4-, 1,5-, 1,6-Hexamethylendiamin, Phenylendiamine, 2,3-, 3,4-, 2,4-, 2,5-, 2,6-Toluylendiamin und 4,4'-, 2,4'-, 2,2'-Diaminodiphenylmethan oder Mischungen daraus, Polyolen, umfassend Glycerin, Trimethylolpropan, Monopropylenglykol, Diethylenglykol, Triethylenglykol, Dipropylenglykol (2,2'-Oxydi-1-propanol, 1,1'-Oxydi-2-propanol, 2-(2-Hydroxypropoxy)-1-propanol) oder Mischungen daraus,
cii) Ethylenoxid, Propylenoxid, Butylenoxid oder Mischungen daraus als Alkylenoxiden.

Eine bevorzugte Polyolkomponente P) umfasst:

a) mindestens ein Polyetherpolyol A) mit einer OH-Zahl im Bereich von 300 bis 500 mg KOH/g, umfassend die Einheiten basierend auf Gemischen mit einer Funktionalität im Bereich von 5,7 bis 6,1 aus den Monomeren ai), aii) und aiii) jeweils ausgewählt aus den Gruppen bestehend aus

ai) Saccharose,
aii) Monopropylenglykol, Diethylenglykol, Triethylenglykol, Dipropylenglykol, Glycerin oder Mischungen daraus,
aiii) ausschließlich Propylenoxid als Alkylenoxid,

b) mindestens ein Polyetherpolyol B) mit einer OH-Zahl im Bereich von 300 bis 500 mg KOH/g, umfassend Einheiten basierend auf Gemischen mit einer Funktionalität im Bereich von 3,0 bis 5,0 aus den Monomeren bi) und bii) jeweils ausgewählt aus den Gruppen bestehend aus

bi) 2,3-, 3,4-, 2,4-, 2,5-, 2,6-Toluylendiamin oder Mischungen daraus,
bii) ausschließlich Propylenoxid als Alkylenoxid, oder Mischungen aus bi) und bii),

c) mindestens ein Polyetherpolyol C) mit einer OH-Zahl im Bereich von 100 bis 290 mg KOH/g, umfassend Einheiten basierend auf Gemischen mit einer Funktionalität im Bereich von 3,0 bis 5,0 oder 2,8 bis 3,0 aus den Monomeren ci) und cii) jeweils ausgewählt aus den Gruppen bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid als Alkylenoxiden,

Eine weitere bevorzugte Polyolkomponente P) umfasst:

a) mindestens ein Polyetherpolyol A) mit einer OH-Zahl im Bereich von 300 bis 500 mg KOH/g, bestehend aus den Einheiten basierend auf Gemischen mit einer Funktionalität im Bereich von 5,7 bis 6,1 aus den Monomeren ai), aii) und aiii) jeweils ausgewählt aus den Gruppen bestehend aus

ai) Saccharose,
aii) Monopropylenglykol, Diethylenglykol, Triethylenglykol, Dipropylenglykol, Glycerin oder Mischungen daraus,
aiii) ausschließlich Propylenoxid als Alkylenoxid,

b) mindestens ein Polyetherpolyol B) mit einer OH-Zahl im Bereich von 300 bis 500 mg KOH/g, umfassend Einheiten basierend auf Gemischen mit einer Funktionalität im Bereich von 3,0 bis 5,0 aus den Monomeren bi) und bii) jeweils ausgewählt aus der Gruppe bestehend aus

bi) 2,3-, 3,4-, 2,4-, 2,5-, 2,6-Toluylendiamin oder Mischungen daraus,
bii) ausschließlich Propylenoxid als Alkylenoxid,

c) mindestens ein Polyetherpolyol C) mit einer OH-Zahl im Bereich von 100 bis 290 mg KOH/g, umfassend Einheiten basierend auf Gemischen mit einer Funktionalität im Bereich von 3,0 bis 5,0 oder 2,8 bis 3,0 aus den Monomeren ci) und cii) jeweils ausgewählt aus den Gruppen bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid als Alkylenoxiden.

Des Weiteren wird die Aufgabe gelöst durch ein Verfahren zur Herstellung von Polyurethan-Hartschaumstoffen durch Umsetzung von

I) organischen oder modifizierten organischen Di- oder Polyisocyanaten PI) oder Gemischen daraus, mit
II) einer erfindungsgemäßen Polyolkomponente P), der zuvor ein Treibmittel F) zugesetzt wurde.

Die Aufgabe wird ebenfalls durch einen Polyurethan-Hartschaumstoff gelöst, der durch das erfindungsgemäße Verfahren erhältlich ist sowie durch die Verwendung der erfindungsgemäßen Polyolkomponente P) zur Herstellung von Polyurethan-Hartschaumstoffen.
Die Aufgabe wird ebenfalls durch die Verwendung des durch das erfindungsgemäße Verfahren hergestellten Polyurethan-Schaumstoffes für Dämm- und Kühlanwendungen gelöst.
Die OH-Zahl (Hydroxylzahl) kann mittels gängiger Methoden bestimmt werden. Beispielsweise kann die OH-Zahl nach DIN 53240 (1971-12) bestimmt werden.
Erfindungsgemäß wird unter der Funktionalität eines Polyetherpolyols, insbesondere des erfindungsgemäßen Polyetherpolyols A) die Anzahl der mit Alkylenoxid reaktiven Wasserstoffatome pro mol Starterverbindung oder pro mol Gemisch der Starterverbindungen vor dem Zeitpunkt der Alkylenoxid-Dosierung verstanden. Der Zeitpunkt der Alkylenoxid-Dosierung ist dabei der Beginn der Zugabe von der Alkylenoxidkomponente zu der/den Starterverbindungen(en). Bei der Berechnung werden alle in der Startermischung vorhandenen und mit Alkylenoxid reaktiven Wasserstoff-Atome der Starterverbindungen(en) berücksichtigt.
Die Funktionalität F im Sinne der vorliegenden Erfindung wird nach folgender Formel berechnet:

$$F = \frac{\sum_{i=1}^{m} n_i * f_i}{\sum_{i=1}^{m} n_i}$$

$n_i$ = mol Starter i
$f_i$ = Funktionalität Starter i
m = Anzahl Starter im Startergemisch
F = Funktionalität

Beispiel für ein Gemisch aus zwei Starterverbindungen, bei mehr Komponenten entsprechend zu ergänzen, wird folgendermaßen berechnet:

F = (mol Starterverbindung A * Funktionalität Starterverbindung A + mol Starterverbindung B * Funktionalität Starterverbindung B)/(mol Starter A + mol Starter B)

So weist beispielsweise ein Polyetherpolyol eine Funktionalität von 5,12 auf, wenn 626,48 mol Glycerin (Funktionalität 3), 559,74 mol Saccharose (Funktionalität 8) und 67,31 mol Dimethylethanolamin (Funktionalität 1) verwendet werden.
Die oben erfindungsgemäß definierte Funktionalität der Polyetherpolyole, insbesondere des erfindungsgemäßen Polyetherpolyols A), kann von der Funktionalität nach dem Reaktionsbeginn, während der Reaktion wenigstens eines Alkylenoxids mit einer Starterverbindung oder des Reaktionsproduktes abweichen, da sich während der Reaktion Nebenprodukte wie Glykole und ungesättigte monofunktionelle Bestandteile bilden. Die Nebenreaktionen sind literaturbekannt.
Die Begriffe Polyolkomponente oder Polyol werden erfindungsgemäß synonym verwendet. Ein Polyol ist im Sinne der vorliegenden Erfindung eine organische Verbindung, die mindestens eine OH-Gruppe aufweist. Insbesondere kann ein Polyol im Sinne der vorliegenden Erfindung eine organische Verbindung sein, die 1 bis 20 OH-Gruppen aufweist. Vorzugsweise ist ein Polyol gemäß der vorliegenden Erfindung eine organische Verbindung mit 2 bis 10 OH-Gruppen, insbesondere 2 bis 8 OH-Gruppen.

Ein Polyetherpolyol kann im Sinne der vorliegenden Erfindung vorzugsweise eine organische Verbindung sein, die als funktionelle Gruppen Ether- und OH-Gruppen aufweist. Insbesondere kann ein Polyetherpolyol ein Polymer mit einem Zahlenmittel der Polymermasse ($M_n$) im Bereich von 100 bis 6.000 g/mol, insbesondere im Bereich von 200 bis 6.000 g/mol, vorzugsweise im Bereich von 300 bis 2.000 g/mol sein. Die Bestimmung des Zahlenmittels erfolgt nach bekannten Verfahren, wie beispielsweise der Viskositätsmessung.

Im Sinne der vorliegenden Erfindung sind die Grenzen der angegebenen Bereiche vorzugsweise mit eingeschlossen. Daher sind beispielsweise in dem Bereich von 5,2 bis 6,4 die Werte 5,2 und 6,4 enthalten.

Die Polyetherpolyole A), B) und C) gemäß der vorliegenden Erfindung sind vorzugsweise unterschiedlich, wobei für Komponente C) zwei Varianten bevorzugt in Betracht kommen. So können sich beispielsweise die Polyetherpolyole A), B) und C) in ihrem Aufbau und/oder in ihrer Polymermasse ($M_n$) unterscheiden.

Vorzugsweise umfasst keines der Polyetherpolyole A), B) oder C) einen Polyetheresterpolyol.

Polyetherpolyole A)

Die Polyolkomponente P) umfasst mindestens oder genau ein Polyetherpolyol A) mit einer Funktionalität im Bereich von 5,7 bis 6,4 und einer OH-Zahl im Bereich von 300 bis 500 mg KOH/g.

Auch kann die Polyolkomponente P) mehrere Polyetherpolyole A) umfassen. Das bedeutet, dass sich die Polyetherpolyole A) in ihrem Aufbau unterscheiden können und/ oder ein anderes Zahlenmittel der Polymermasse ($M_n$) aufweisen können.

Vorzugsweise weist das Polyetherpolyol A) eine Funktionalität im Bereich von 5,7 bis 6,3, besonders bevorzugt eine Funktionalität im Bereich von 5,7 bis 6,1, insbesondere bevorzugt eine Funktionalität im Bereich von 5,9 bis 6,1 und ganz besonders bevorzugt eine Funktionalität im Bereich von 5,95 bis 6,05 auf.

Durch den für das Polyetherpolyol A) definierten Bereich der Funktionalität kann die Entformung bei Polyurethan-Hartschaumstoffen verbessert werden. Zudem können die Polyetherpolyole A) vorteilhafte Viskositätseigenschaften bei der Verarbeitung, insbesondere während der Herstellung von Polyurethan-Hartschaumstoffen, aufweisen.

Ebenfalls bevorzugt weist das Polyetherpolyol A) eine OH-Zahl im Bereich von 340 bis 450 mg KOH/g, ganz besonders bevorzugt eine OH-Zahl im Bereich von 400 bis 450 mg KOH/g auf. Dadurch kommt es zu einer verbesserten Entformung während der Herstellung der PU-Hartschaumstoffe.

In einer weiteren bevorzugten Ausgestaltung weist das Polyetherpolyol A) eine Funktionalität im Bereich von 5,7 bis 6,1 und eine OH-Zahl im Bereich von 340 bis 450 mg KOH/g, insbesondere eine Funktionalität im Bereich von 5,9 bis 6,1 und eine OH-Zahl im Bereich von 340 bis 450 mg KOH/g, auf.

Die Herstellung der erfindungsgemäß verwendeten Polyetherpolyole A) erfolgt durch Anlagerung von Alkylenoxiden an Verbindungen mit mindestens zwei mit Alkylenoxiden reaktiven Wasserstoffatomen, im Rahmen der vorliegenden Erfindung als Starterverbindung oder Starter bezeichnet, unter Verwendung eines Katalysators. Diese Reaktion ist dem Fachmann an sich bekannt.

Als Katalysatoren für die Herstellung der Polyetherpolyole A) werden zumeist basische Verbindungen eingesetzt. Dabei handelt es sich bei den technischen Verfahren meist um die Hydroxide von Alkalimetallen, wie z. B. Natrium-, Cäsium- oder insbesondere Kaliumhydroxid. Auch Alkalialkoholate, wie z. B. Natriummethylat, Natrium- oder Kaliummethylat oder Kaliumisopropylat, sind als Katalysatoren bekannt. Ebenfalls kann die Herstellung unter Amin-Katalyse erfolgen.

Vorzugsweise sind die Amine ausgewählt aus der Gruppe enthaltend Trialkylamine, insbesondere Trimethylamin, Triethylamin, Tripropylamin, Tributylamin, Dimethylalkylamine, insbesondere Dimethylethanolamin, Dimethylcyclohexylamin, Dimethylethylamin, Dimethylbutylamin, aromatische Amine, insbesondere Dimethylanilin, Dimethylaminopyridin, Dimethylbenzylamin, Pyridin, Imidazole (insbesondere Imidazol, 4(5)-Methylimidazol, 3-Methylimidazol, 1-Hydroxypropylimidazol), Guanidine, Amidine, insbesondere 1,5-Diazobicylco[4.3.0]-non-5-en, 1,5-Diazabicylo[5.4.0]undec-7-en. Vorzugsweise ist der Katalysator Dimethylethanolamin. Ganz besonders bevorzugt ist der Katalysator ein Imidazol.

Die Anlagerung der Alkylenoxide wird bevorzugt bei einer Temperatur zwischen 90 und 150 °C und einem Druck zwischen 0,1 bis 8 bar durchgeführt. An die Dosierung der Alkylenoxide schließt sich üblicherweise eine Nachreaktionsphase an, in der das Alkylenoxid abreagiert. Danach kann sich, soweit erforderlich, eine Nachreaktionsphase anschließen. Es folgt üblicherweise Destillation zur Abtrennung leicht flüchtiger Bestandteile, vorzugsweise unter Vakuum.

Insbesondere bei der Verwendung von festen Starterverbindungen, wie z. B. Saccharose, zur Herstellung des erfindungsgemäßen Polyetherpolyols A), sind am Anfang des Prozesses nur langsame Dosierraten möglich, da sich das Alkylenoxid nur schlecht in der Reaktionsmischung löst und zu langsamen Reaktionsgeschwindigkeiten führt. Zudem sorgt die hohe Viskosität, die bei Verwendung von festen Starterverbindungen in der Startermischung entsteht, für eine schlechtere Wärmeabfuhr. Das kann zu lokalen Überhitzungen führen, was einen negativen Einfluss auf die Produktqualität hat. Zudem beschleunigt die hohe Viskosität die Abnutzung der Pumpen und Wärmetauscher. Durch Zugabe wenigstens eines Polyols zur Startermischung können die negativen Effekte verringert werden. Das ist z. B. in EP 2542612 beschrieben. Bei einigen der beschriebenen Versuche wurden die Mischungen der Starterverbindungen daher mit Polyetherolen versetzt, um die Viskosität der Startmischung zu reduzieren und eine bessere Prozessführung zu ermöglichen. Es werden erfindungsgemäß bevorzugt zwei Polyetherole eingesetzt: Polyol H ist ein Saccharose/Glycerin-gestartetes Propoxylat mit einer Molmasse von 488 g/mol und einer Funktionalität von 4,3. Polyol I ist Saccharose/Glycerin-gestartet mit einem Molgewicht 639 g/mol und von einer Funktionalität von 5,1. Die Zugabe der Polyetheralkohole zur Startermischung dient primär dazu, die Prozessführung zu vereinfachen.

Bei der Berechnung der Funktionalität des erfindungsgemäßen Polyetherpolyols A) werden die oben genannten Polyole H und/oder I entsprechend beachtet.

Vorzugsweise enthält ein geeignetes Polyetherpolyol A) das Umsetzungsprodukt, insbesondere besteht ein Polyetherpolyol A) aus dem Umsetzungsprodukt, von

i) 10 bis 60 Gew.-% der hydroxylgruppenhaltigen Starterverbindung und
ii) 40 bis 90 Gew.-% mindestens des Alkylenoxids, zuzüglich gegebenenfalls Katalysator.

Die Starterverbindung umfasst die Begriffe Starterverbindung und Starterverbindungen.

Die Starterverbindungen der Komponente i) werden so ausgewählt, dass die Funktionalität der Komponente i) 5,7 bis 6,4, bevorzugt 5,7 bis 6,3, besonders bevorzugt im Bereich von 5,7 bis 6,1, insbesondere bevorzugt im Bereich von 5,9 bis 6,1 und ganz besonders bevorzugt im Bereich von 5,95 bis 6,05 ist.

Ganz besonders bevorzugt sind Gemische aus Saccharose und mindestens einer Verbindung ausgewählt aus: Glycerin, Diethylenglykol und Dipropylenglykol. Ganz besonders bevorzugt ist ein Gemisch aus Saccharose und Glycerin.

Der Anteil der Starterverbindungen i) an dem erfindungsgemäß eingesetzten Polyetherpolyol A) beträgt im Allgemeinen 20 bis 45 Gew.-%, bevorzugt 25 bis 42 Gew.-%, besonders bevorzugt 30 bis 40 Gew.-%, ganz besonders bevorzugt 33 bis 38 Gew.-%, bezogen auf das Gewicht des Polyetherpolyols A).

Besonders bevorzugt enthält ein geeignetes Polyetherpolyol A) das Umsetzungsprodukt, insbesondere besteht ein Polyetherpolyol A) aus dem Umsetzungsprodukt von

ai) 5 bis 90 Gew.-% Saccharose,
aii) 5 bis 80 Gew.-% des von ai) unterschiedlichen Polyols,
aiii) 5 bis 90 Gew.-% mindestens eines Alkylenoxids,

wobei die Summe aus ai), aii), und/oder aiii) 100 Gew.-% ergibt, zuzüglich gegebenenfalls Katalysator wie Imidazol.

Der Katalysator wird gegebenenfalls zusätzlich zu den Komponenten ai), aii), aiii) eingesetzt.

Dipropylenglykol umfasst im Sinne der vorliegenden Erfindung 2,2'-Oxydi-1-propanol, 1,1'-Oxydi-2-propanol, 2-(2-Hydroxypropoxy)-1-propanol.

Polyetherpolyole B)

Die Polyolkomponente P) umfasst mindestens ein Polyetherpolyol B).

Insbesondere kann die Polyolkomponente P) ein oder mehrere Polyetherpolyole B) umfassen. Das bedeutet, dass sich die Polyetherpolyole B) in ihrem Aufbau unterscheiden können und/ oder ein anderes Zahlenmittel der Polymermasse ($M_n$) aufweisen können.

Vorzugsweise weist das Polyetherpolyol B) eine Funktionalität im Bereich von 3,0 bis 5,0, ganz besonders bevorzugt eine Funktionalität im Bereich von 3,5 bis 4,5, insbesondere bevorzugt eine Funktionalität von 3,8 bis 4,0 oder etwa 4,0 auf.

Ebenfalls bevorzugt weist das Polyetherpolyol B) eine OH-Zahl im Bereich von 300 bis 500 mg KOH/g, ganz besonders bevorzugt eine OH-Zahl im Bereich von 380 bis 450 mg KOH/g auf.

Bevorzugte Starterverbindungen sind vicinales TDA oder nicht vicinales TDA, wie z. B. 2,3- und/oder 3,4-Toluylendiamin oder Mischungen mit z. B. 50 bis 80 Gew.-% vicinalem TDA.

Polyetherpolyole C)

Die Polyolkomponente P) umfasst mindestens ein Polyetherpolyol C).

Insbesondere kann die Polyolkomponente P) ein oder mehrere Polyetherpolyole C) umfassen. Das bedeutet, dass sich die Polyetherpolyole C) in ihrem Aufbau unterscheiden können und/ oder ein anderes Zahlenmittel der Poly-

mermasse ($M_n$) aufweisen können.

Vorzugsweise weist das Polyetherpolyol C) eine Funktionalität im Bereich von 3,0 bis 5,0, ganz besonders bevorzugt eine Funktionalität im Bereich von 3,5 bis 4,5 oder 3,5 bis 4,0 oder eine Funktionalität von 2,8 bis 3,0 auf.

Gemäß einer Ausführungsform der Erfindung ist die Funktionalität damit im Bereich von 3,0 bis 5,0, oder 3,1 bis 5,0.

Gemäß einer weiteren Ausführungsform der Erfindung ist die Funktionalität damit im Bereich von 2,8 bis 3,0, oder 2,8 bis unter 3,0.

Ebenfalls bevorzugt weist das Polyetherpolyol C) eine OH-Zahl im Bereich von 100 bis 290 mg KOH/g, ganz besonders bevorzugt eine OH-Zahl im Bereich von 150 bis 200 mg KOH/g auf.

Die Starterverbindungen für die erfindungsgemäß verwendeten Polyetherpolyole C) werden im Allgemeinen so ausgewählt, dass deren Funktionalität 3,0 bis 5,0, bevorzugt 3,5 bis 4,5 oder 2,8 bis 3,0 beträgt. Gegebenenfalls wird ein Gemisch von geeigneten Startermolekülen eingesetzt.

Als Starterverbindungen für die Polyetherpolyole C) kommen beispielsweise in Betracht: aliphatische und aromatische Diamine, wie Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 3,4-, 2,4-, 2,5- und 2,6-Toluylendiamin und 4,4'-, 2,4'- und 2,2'-Diaminodiphenylmethan.

Besonders bevorzugt sind die oben genannten primären Diamine, insbesondere zumindest teilweise vicinales TDA (vic-TDA) wie z. B. 2,3- und/oder 3,4-Toluylendiamin.

Als Starterverbindungen für Polyetherpolyol C) kommen auch Polyole in Betracht. Vorzugsweise sind die Polyole ausgewählt aus der Gruppe bestehend aus Glycerin, Trimethylolpropan, Monopropylenglykol, Diethylenglykol, Triethylenglykol, Dipropylenglykol (2,2'-Oxydi-1-propanol 1,1'-Oxydi-2-propanol, 2-(2-Hydroxypropoxy)-1-propanol), Glykolen wie Ethylenglykol, Propylenglykol und Mischungen davon. Ganz besonders bevorzugt ist Glycerin.

Geeignete Alkylenoxide für die erfindungsgemäß verwendeten Polyetherpolyole C) sind beispielsweise ausgewählt aus der Gruppe bestehend aus Ethylenoxid, Propylenoxid, 1,2- bzw. 2,3-Butylenoxid und Mischungen davon. Die Alkylenoxide können einzeln, alternierend nacheinander oder als Mischungen verwendet werden.

Bevorzugte Alkylenoxide für die Herstellung des Polyetherpolyols C) sind Propylenoxid und/oder Ethylenoxid, besonders bevorzugt sind Gemische aus Ethylenoxid und Propylenoxid mit > 50 Gew.-% Propylenoxid, ganz besonders bevorzugt ist reines Propylenoxid.

Erfindungsgemäß verwendete Polyetherpolyole B) und C) können nach bekannten Verfahren hergestellt werden, beispielsweise durch anionische Polymerisation mit Alkalihydroxiden, wie z. B. Natrium- oder Kaliumhydroxid, oder Alkalialkoholaten, wie z. B. Natriummethylat, Natrium- oder Kaliummethylat oder Kaliumisopropylat, als Katalysatoren oder durch kationische Polymerisation mit Lewis-Säuren, wie Antimonpentachlorid, Borfluorid-Etherat u. a. oder Bleicherde, als Katalysatoren aus einem oder mehreren Alkylenoxiden mit 2 bis 4 Kohlenstoffatomen im Alkylenrest. Ebenfalls kann die Herstellung unter Imidazol-Katalyse erfolgen oder unter Verwendung von Trimethylamin oder N,N-Dimethylcyclohexylamin.

Bevorzugt umfasst die Polyolkomponente P):

    a) das Polyetherpolyol A) mit einer Funktionalität im Bereich von 5,7 bis 6,4 und einer OH-Zahl im Bereich von 300 bis 500 mg KOH/g,
    b) das Polyetherpolyol B) mit einer Funktionalität im Bereich von 3,0 bis 5,0 und einer OH-Zahl im Bereich von 300 bis 500 mg KOH/g,
    c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g,
    d) mindestens einen Katalysator D),
    e) mindestens ein Hilfsmittel und/oder Zusatzstoff E) und
    f) gegebenenfalls mindestens ein Treibmittel F).

Katalysatoren D)

Die erfindungsgemäße Polyolkomponente P) kann wenigstens einen Katalysator D) enthalten.

Als Katalysatoren D) werden insbesondere Verbindungen verwendet, die die Reaktion der in der Polyolkomponente P) enthaltenen Polyetherpolyole A), B) und C) mit den organischen, gegebenenfalls modifizierten Di- und/oder Polyisocyanaten G) gemäß dem nachstehenden erfindungsgemäßen Verfahren stark beschleunigen.

Zweckmäßigerweise können als Katalysatoren D) basische Polyurethankatalysatoren verwendet werden, beispielsweise tertiäre Amine, wie Triethylamin, Tributylamin, Dimethylbenzylamin, Dicyclohexylmethylamin, Dimethylcyclohexylamin, Bis(2-dimethylaminoethyl)ether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethyl-hexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo(2,2,2)octan(Dabco), 1,8-Diaza-bicyclo(5.4.0)-undecen-7, und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z. B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat.

Als Katalysatoren D) kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von Säuren, insbesondere langkettigen Fettsäuren mit 10 bis 20 C-Atomen und gegebenenfalls seitenständigen OH-Gruppen.

Bevorzugt wird eine Mischung aus mehreren der vorgenannten Katalysatoren D) eingesetzt. Besonders bevorzugt eingesetzt wird eine Katalysatormischung D) bestehend aus: Dimethylcyclohexylamin D1), Pentamethyldiethylentriamin oder Bis(2-dimethylaminoethyl)ether D2), Tris(dimethylaminopropyl)hexahydro-1,3,5-triazin D3) und Dimethylbenzylamin D4).

Bevorzugt beträgt in der vorgenannten Katalysatormischung aus den Katalysatoren D1) bis D4) der Anteil des Katalysators D1) 20 bis 60 Gew.-%, der Anteil des Katalysators D2) 10 bis 50 Gew.-%, der Anteil des Katalysators D3) 10 bis 40 Gew.-% und der Anteil des Katalysators D4) 20 bis 50 Gew.-%, wobei die Summe der Katalysatoren D1) bis D4) 100 Gew.-% ergibt.

Vorzugsweise verwendet werden 1,0 bis 5,5 Gew.-%, insbesondere 1,0 bis 5,0 Gew.-% eines oder mehrerer Katalysatoren D), bezogen auf das Gewicht der Komponenten A) bis F).

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten Katalysatoren können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Hilfsmittel und/oder Zusatzstoffe E)

Die erfindungsgemäße Polyolkomponente P) kann Hilfsmittel und/oder Zusatzstoffe E) enthalten.

Als Hilfsmittel und/oder Zusatzstoffe E) der Polyolkomponente P) seien beispielsweise oberflächenaktive Substanzen wie Emulgatoren, Schaumstabilisatoren und Zellregler, bevorzugt Schaumstabilisatoren, genannt.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Besonders bevorzugt werden Silikonstabilisatoren.

Als Zusatzmittel ist Dipropylenglykol (DPG) besonders bevorzugt.

Bevorzugt enthält die Polyolkomponente P) als weiteres Hilfsmittel oder als Zusatzstoff E) Schaumstabilisatoren, insbesondere silikonhaltige Schaumstabilisatoren wie Siloxanoxalkylen-Mischpolymerisate und andere Organopolysiloxane.

Die vorgenannten Schaumstabilisatoren werden vorzugsweise in Mengen von 0,5 bis 4 Gew.-%, besonders bevorzugt 1 bis 3 Gew.-% eingesetzt, bezogen auf das Gewicht der Komponenten A) bis F) eingesetzt werden.

Nähere Angaben über die vorgenannten und weitere geeignete Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Treibmittel F)

Die erfindungsgemäße Polyolkomponente P) kann wenigstens ein Treibmittel F) enthalten.

Vorzugsweise enthält die erfindungsgemäße Polyolkomponente P) 1 bis 20,0 Gew.-%, besonders bevorzugt 1,5 bis 5,0 Gew.-%, ganz besonders bevorzugt 1,0 bis 3,0 Gew.-%, Treibmittel F), bezogen auf die gesamte Polyolkomponente P).

Geeignete Treibmittel sind sowohl physikalische als auch chemische Treibmittel.

Als geeignete Treibmittel F) können im Allgemeinen alle dem Fachmann bekannten halogenierten, bevorzugt fluorierten, Alkene als Treibmittel eingesetzt werden.

Bevorzugt werden erfindungsgemäß $C_2$ bis $C_6$ Fluoralkene, besonders bevorzugt $C_3$ bis $C_5$ Fluoralkene eingesetzt.

Besonders bevorzugte Beispiele für erfindungsgemäß geeignete fluorierte Alkene sind Propene, Butene, Pentene und Hexene mit 3 bis 6 Fluor-Substituenten, wobei andere Substituenten wie Chlor vorhanden sein können, beispielsweise Tetrafluorpropene, Fluorchlorpropene, beispielsweise Trifluormonochlorpropene, Pentafluorpropene, Fluorchlorbutene, Hexafluorbutene oder Mischungen davon.

Erfindungsgemäß besonders bevorzugte fluorierte Alkene sind ausgewählt aus der Gruppe bestehend aus cis-odertrans-1,1,1,3-Tetrafluorpropen, 1,1,1-Trifluor-2-chlorpropen, 1-Chlor-3,3,3-trifluorpropen, 1,1,1,2,3-Pentafluorpropen, in cis-odertrans-Form, 1,1,1,4,4,4-Hexafluorbuten, 1-Brompentafluorpropen, 2-Brompentafluorpropen, 3-Brompentafluorpropen, 1,1,2,3,3,4,4-Heptafluor-1-buten, 3,3,4,4,5,5,5-Heptafluor-1-penten, 1-Brom-2,3,3,3-tetrafluor-propen, 2-Brom-1,3,3,3-tetrafluorpropen, 3-Brom-1,1,3,3-tetrafluorpropen, 2-Brom-3,3,3-trifluor-propen, E-1-Brom-3,3,3-trifluorpropen, 3,3,3-Trifluor-2-(trifluormethyl)propen, 1-Chlor-3,3,3-tri-fluorpropen, 2-Chlor-3,3,3-trifluorpropen,1,1,1-Trifluor-2-buten und Mischungen davon.

Vorzugsweise werden keine halogenierten Kohlenwasserstoffe als Treibmittel F) verwendet.

Als chemisches Treibmittel wird Wasser bevorzugt verwendet. Vorzugsweise wird Wasser im Bereich von 1,5 bis 3 Gew.-%, bezogen auf die gesamte Polyolkomponente P, eingesetzt.

Als Treibmittel bevorzugt verwendet werden Pentanisomere und/oder Cyclopentan, insbesondere Cyclopentan. Vorzugsweise werden Pentanisomere und/oder Cyclopentan im Bereich von 9 bis 17 Gew.-%, bezogen auf die gesamte Polyolkomponente P, eingesetzt. Cyclopentan ist bevorzugt.

Vorzugsweise umfasst die Polyolkomponente P):

a) mindestens ein Polyetherpolyol A) mit einer Funktionalität im Bereich von 5,7 bis 6,4 und einer OH-Zahl im Bereich von 300 bis 500 mg KOH/g, umfassend Einheiten basierend auf den Monomeren ausgewählt aus der Gruppe bestehend aus

ai) Saccharose,
aii) Monopropylenglykol, Diethylenglykol, Triethylenglykol, Dipropylenglykol, Glycerin oder Mischungen daraus,
aiii) Propylenoxid,
oder Mischungen aus ai), aii) und/oder aiii),

b) mindestens ein Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii),
c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii).

Vorzugsweise umfasst die Polyolkomponente P):

a) mindestens ein Polyetherpolyol A) mit einer Funktionalität im Bereich von 5,7 bis 6,4 und einer OH-Zahl im Bereich von 300 bis 500 mg KOH/g, umfassend Einheiten basierend auf den Monomeren ausgewählt aus der Gruppe bestehend aus

ai) Saccharose,
aii) Monopropylenglykol, Diethylenglykol, Triethylenglykol, Dipropylenglykol, Glycerin oder Mischungen daraus,
aiii) Propylenoxid,

oder Mischungen aus ai), aii) und/oder aiii),
b) mindestens ein Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii),
c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus ci)

2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii),
d) mindestens einen Katalysator D),
e) mindestens ein Hilfsmittel und/oder Zusatzstoff E) und
f) gegebenenfalls mindestens ein Treibmittel F).

Vorzugsweise umfasst die Polyolkomponente P):

a) 1 bis 70 Gew.-%, vorzugsweise 40 bis 65 Gew.-%, mindestens eines Polyetherpolyols A) mit einer Funktionalität im Bereich von 5,7 bis 6,4 und einer OH-Zahl im Bereich von 300 bis 500 mg KOH/g, umfassend Einheiten basierend auf den Monomeren ausgewählt aus der Gruppe bestehend aus

ai) Saccharose,
aii) Monopropylenglykol, Diethylenglykol, Triethylenglykol, Dipropylenglykol, Glycerin oder Mischungen daraus,
aiii) Propylenoxid,

oder Mischungen aus ai), aii) und/oder aiii),
b) 1 bis 50 Gew.-%, vorzugsweise 10 bis 40 Gew.-%, mindestens eines Polyetherpolyols B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii),
c) 1 bis 20 Gew.-%, vorzugsweise 4 bis 18 Gew.-%, mindestens eines Polyetherpolyols C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

ci) 2,3-, 3,4-, 2,4-, 2,5-, 2,6-Toluylendiamin oder Mischungen daraus, oder Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii),
d) 0,1 bis 10 Gew.-%, vorzugsweise 1 bis 5 Gew.-%, mindestens eines Katalysators D),
e) 0,1 bis 10 Gew.-%, vorzugsweise 1 bis 5 Gew.-%, mindestens ein Hilfsmittel und/oder Zusatzstoff E) und
f) 0 bis 10 Gew.-%, vorzugsweise 1 bis 5 Gew.-%, mindestens eines Treibmittels F), wobei die Summe der Komponenten A), B), C), D), E) und gegebenenfalls F) 100 Gew.-% ergibt.

Vorzugsweise umfasst die Polyolkomponente P):

a) 1 bis 70 Gew.-%, vorzugsweise 40 bis 65 Gew.-%, mindestens eines Polyetherpolyols A) mit einer Funktionalität im Bereich von 5,7 bis 6,4 und einer OH-Zahl im Bereich von 300 bis 500 mg KOH/g, umfassend Einheiten basierend auf den Monomeren ausgewählt aus der Gruppe bestehend aus

ai) 10 bis 29,9 Gew.-% Saccharose,
aii) 0,1 bis 20 Gew.-% Monopropylenglykol, Diethylenglykol, Triethylenglykol, Dipropylenglykol, Glycerin oder Mischungen daraus,
aiii) 60 bis 89,9 Gew.-% Propylenoxid,

oder Mischungen aus ai), aii) und/oder aiii), wobei die Summe aus ai), aii) und aiii) 100 Gew.-% ergibt,
b) 1 bis 50 Gew.-%, vorzugsweise 10 bis 40 Gew.-%, mindestens eines Polyetherpolyols B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii), wobei die Summe aus bi) und bii) 100 Gew.-% ergibt,
c) 1 bis 20 Gew.-% , vorzugsweise 4 bis 18 Gew.-%, mindestens eines Polyetherpolyols C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid,
oder Mischungen aus ci) und cii), wobei die Summe aus ci) und cii) 100 Gew.-% ergibt,

d) 0,1 bis 10 Gew.-% , vorzugsweise 1 bis 5 Gew.-%, mindestens eines Katalysators D),
e) 0,1 bis 10 Gew.-% , vorzugsweise 1 bis 5 Gew.-%, mindestens ein Hilfsmittel und/oder Zusatzstoff E) und
f) 0 bis 10 Gew.-% , vorzugsweise 1 bis 5 Gew.-%, mindestens eines Treibmittels F), wobei die Summe der Komponenten A), B), C), D), E) und gegebenenfalls F) 100 Gew.-% ergibt.

Vorzugsweise umfasst die Polyolkomponente P):

a) mindestens ein Polyetherpolyol A) mit einer Funktionalität im Bereich von 5,7 bis 6,1 und einer OH-Zahl im Bereich von 300 bis 500 mg KOH/g, umfassend die Einheiten basierend auf den Monomeren ausgewählt aus der Gruppe bestehend aus

ai) Saccharose,
aii) Monopropylenglykol, Diethylenglykol, Triethylenglykol, Dipropylenglykol, Glycerin oder Mischungen daraus,
aiii) Propylenoxid,

oder Mischungen aus ai), aii) und/oder aiii),
b) mindestens ein Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii),
c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii).

Vorzugsweise umfasst die Polyolkomponente P):

a) mindestens ein Polyetherpolyol A) mit einer Funktionalität im Bereich von 5,7 bis 6,1 und einer OH-Zahl im Bereich von 300 bis 500 mg KOH/g, umfassend die Einheiten basierend auf den Monomeren ausgewählt aus der Gruppe bestehend aus

ai) Saccharose,
aii) Monopropylenglykol, Diethylenglykol, Triethylenglykol, Dipropylenglykol, Glycerin oder Mischungen daraus,
aiii) Propylenoxid,

oder Mischungen aus ai), aii) und/oder aiii),
b) mindestens ein Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii),
c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

ci) 2,3-, 3,4-, 2,4-, 2,5-, 2,6-Toluylendiamin oder Mischungen daraus, oder Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii),
d) mindestens einen Katalysator D),
e) mindestens ein Hilfsmittel und/oder Zusatzstoff E) und
f) gegebenenfalls mindestens ein Treibmittel F).

Vorzugsweise umfasst die Polyolkomponente P):

a) mindestens ein Polyetherpolyol A) mit einer Funktionalität im Bereich von 5,7 bis 6,1 und einer OH-Zahl im Bereich von 300 bis 500 mg KOH/g, bestehend aus den Einheiten basierend auf den Monomeren ausgewählt aus der Gruppe bestehend aus

ai) Saccharose,
aii) Monopropylenglykol, Diethylenglykol, Triethylenglykol, Dipropylenglykol, Glycerin oder Mischungen daraus,
aiii) Propylenoxid,

oder Mischungen aus ai), aii) und/oder aiii),
b) mindestens einen Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii),
c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus ci)

> 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
> cii) Ethylenoxid und/oder Propylenoxid,

oder Mischungen aus ci) und cii).

Vorzugsweise umfasst die Polyolkomponente P):

a) mindestens ein Polyetherpolyol A) mit einer Funktionalität im Bereich von 5,7 bis 6,1 und einer OH-Zahl im Bereich von 300 bis 500 mg KOH/g, bestehend aus den Einheiten basierend auf den Monomeren ausgewählt aus der Gruppe bestehend aus

> ai) Saccharose,
> aii) Monopropylenglykol, Diethylenglykol, Triethylenglykol, Dipropylenglykol, Glycerin oder Mischungen daraus,
> aiii) Propylenoxid,

oder Mischungen aus ai), aii) und/oder aiii),
b) mindestens ein Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

> bi) 2,3-, 3,4-, 2,4-, 2,5-, 2,6-Toluylendiamin oder Mischungen daraus,
> bii) Propylenoxid,

oder Mischungen aus bi) und bii),
c) mindestens ein Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus ci)

> 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
> cii) Ethylenoxid und/oder Propylenoxid,

oder Mischungen aus ci) und cii),
d) mindestens einen Katalysator D),
e) mindestens ein Hilfsmittel und/oder Zusatzstoff E) und
f) gegebenenfalls mindestens ein Treibmittel F).

Vorzugsweise besteht die Polyolkomponente P) aus:

a) mindestens einem Polyetherpolyol A) mit einer Funktionalität im Bereich von 5,7 bis 6,1 und einer OH-Zahl im Bereich von 300 bis 500 mg KOH/g, bestehend aus den Einheiten basierend auf den Monomeren ausgewählt aus der Gruppe bestehend aus

> ai) Saccharose,
> aii) Monopropylenglykol, Diethylenglykol, Triethylenglykol, Dipropylenglykol, Glycerin oder Mischungen daraus,
> aiii) Propylenoxid,

oder Mischungen aus ai), aii) und/oder aiii),
b) mindestens einem Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

> bi) 2,3-, 3,4-, 2,4-, 2,5-, 2,6-Toluylendiamin oder Mischungen daraus,
> bii) Propylenoxid,

oder Mischungen aus bi) und bii),
c) mindestens einem Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

    ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
    cii) Ethylenoxid und/oder Propylenoxid,

oder Mischungen aus ci) und cii).

Vorzugsweise besteht die Polyolkomponente P) aus:

a) mindestens einem Polyetherpolyol A) mit einer Funktionalität im Bereich von 5,7 bis 6,1 und einer OH-Zahl im Bereich von 300 bis 500 mg KOH/g, bestehend aus den Einheiten basierend auf den Monomeren ausgewählt aus der Gruppe bestehend aus

    ai) Saccharose,
    aii) Monopropylenglykol, Diethylenglykol, Triethylenglykol, Dipropylenglykol, Glycerin oder Mischungen daraus,
    aiii) Propylenoxid,

oder Mischungen aus ai), aii) und/oder aiii),
b) mindestens einem Polyetherpolyol B) mit einer Funktionalität im Bereich von 3,0 bis 5,0 und einer OH-Zahl im Bereich von 300 bis 500 mg KOH/g, umfassend Einheiten basierend auf den Monomeren ausgewählt aus der Gruppe bestehend aus

    bi) 2,3-, 3,4-, 2,4-, 2,5-, 2,6-Toluylendiamin oder Mischungen daraus,
    bii) Propylenoxid,

oder Mischungen aus bi) und bii),
c) mindestens einem Polyetherpolyol C) mit einer Funktionalität im Bereich von 3,0 bis 5,0 oder 2,8 bis 3,0 und einer OH-Zahl im Bereich von 100 bis 290 mg KOH/g, umfassend Einheiten basierend auf den Monomeren ausgewählt aus der Gruppe bestehend aus

    ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
    cii) Ethylenoxid und/oder Propylenoxid,

oder Mischungen aus ci) und cii),
d) mindestens einem Katalysator D),
e) mindestens einem Hilfsmittel und/oder Zusatzstoff E), und
f) gegebenenfalls mindestens ein Treibmittel F), vorzugsweise ein Treibmittel.

Vorzugsweise umfasst die Polyolkomponente P):

a) 1 bis 70 Gew.-%, vorzugsweise 40 bis 65 Gew.-%, mindestens eines Polyetherpolyols A) mit einer Funktionalität im Bereich von 5,7 bis 6,4, insbesondere 5,95 bis 6,05, und einer OH-Zahl im Bereich von 300 bis 500 mg KOH/g, bestehend aus den Einheiten basierend auf den Monomeren ausgewählt aus der Gruppe bestehend aus

    ai) 10 bis 29,9 Gew.-% Saccharose,
    aii) 0,1 bis 20 Gew.-% Monopropylenglykol, Diethylenglykol, Triethylenglykol, Dipropylenglykol, Glycerin oder Mischungen daraus,
    aiii) 60 bis 89,9 Gew.-% Propylenoxid,

oder Mischungen aus ai), aii) und/oder aiii), wobei die Summe aus ai), aii) und aiii) 100 Gew.-% ergibt,
b) 1 bis 50 Gew.-%, vorzugsweise 10 bis 40 Gew.-%, mindestens eines Polyetherpolyols B) mit einer Funktionalität im Bereich von 3,0 bis 5,0 und einer OH-Zahl im Bereich von 300 bis 500 mg KOH/g, bestehend aus den Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii), wobei die Summe aus bi) und bii) 100 Gew.-% ergibt,
c) 1 bis 20 Gew.-%, vorzugsweise 4 bis 18 Gew.-%, mindestens eines Polyetherpolyols C) mit einer Funktionalität im Bereich von 3,0 bis 5,0 und einer OH-Zahl im Bereich von 1 bis 290 mg KOH/g, bestehend aus den Einheiten basierend auf den Monomeren ausgewählt aus der Gruppe bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii), wobei die Summe aus ci) und cii) 100 Gew.-% ergibt,
d) 0,1 bis 10 Gew.-%, vorzugsweise 1 bis 5 Gew.-%, mindestens eines Katalysators D),
e) 0,1 bis 10 Gew.-%, vorzugsweise 1 bis 5 Gew.-%, mindestens ein Hilfsmittel und/oder Zusatzstoff E), und
f) 0 bis 20 Gew.-%, vorzugsweise 1,5 bis 5 Gew.-%, mindestens eines Treibmittels F), wobei die Summe der Komponenten A), B), C), D), E) und gegebenenfalls F) 100 Gew.-% ergibt.

Vorzugsweise besteht die Polyolkomponente P) aus:

a) 1 bis 70 Gew.-%, vorzugsweise 40 bis 65 Gew.-%, mindestens eines Polyetherpolyols A) mit einer Funktionalität im Bereich von 5,7 bis 6,4, insbesondere 5,9 bis 6,1, und einer OH-Zahl im Bereich von 300 bis 500 mg KOH/g, bestehend aus den Einheiten basierend auf den Monomeren ausgewählt aus der Gruppe bestehend aus

ai) 10 bis 29,9 Gew.-% Saccharose,
aii) 0,1 bis 20 Gew.-% Monopropylenglykol, Diethylenglykol, Triethylenglykol, Dipropylenglykol, Glycerin oder Mischungen daraus,
aiii) 60 bis 89,9 Gew.-% Propylenoxid,

oder Mischungen aus ai), aii) und/oder aiii), wobei die Summe aus ai), aii) und aiii) 100 Gew.-% ergibt,
b) 1 bis 50 Gew.-%, vorzugsweise 10 bis 40 Gew.-%, mindestens eines Polyetherpolyols B) mit einer Funktionalität im Bereich von 3,0-5,0 und einer OH-Zahl im Bereich von 300 bis 500 mg KOH/g, bestehend aus den Einheiten basierend auf den Monomeren ausgewählt aus der Gruppe bestehend aus

bi) 2,3-, 3,4-, 2,4-, 2,5-, 2,6-Toluylendiamin oder Mischungen daraus,
bii) Propylenoxid,

oder Mischungen aus bi) und bii), wobei die Summe aus bi) und bii) 100 Gew.-% ergibt,
c) 1 bis 20 Gew.-%, vorzugsweise 4 bis 18 Gew.-%, mindestens eines Polyetherpolyols C) mit einer Funktionalität im Bereich von 3,0 bis 5,0 und einer OH-Zahl im Bereich von 1 bis 290 mg KOH/g, bestehend aus den Einheiten basierend auf den Monomeren ausgewählt aus der Gruppe bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid,

oder Mischungen aus ci) und cii), wobei die Summe aus ci) und cii) 100 Gew.-% ergibt,
d) 0,1 bis 10 Gew.-%, vorzugsweise 1 bis 5 Gew.-%, mindestens eines Katalysators D),
e) 0,1 bis 10 Gew.-%, vorzugsweise 1 bis 5 Gew.-%, mindestens ein Hilfsmittel und/oder Zusatzstoff E), und
f) 0 bis 20 Gew.-%, vorzugsweise 1,5 bis 5 Gew.-%, mindestens eines Treibmittels F), wobei die Summe der Komponenten A), B), C), D), E) und gegebenenfalls F) 100 Gew.-% ergibt.

Die Erfindung betrifft ebenfalls ein Verfahren zur Herstellung von Polyurethan-Hartschaumstoffen durch Umsetzung von

I) organischen oder modifizierten organischen Di- oder Polyisocyanaten PI) oder Gemischen daraus mit
II) einer erfindungsgemäßen Polyolkomponente P), der zuvor ein Treibmittel F) zugesetzt wurde.

Di- oder Polyisocyanate PI)

Als organische Di- oder Polyisocyanate PI) kommen die an sich bekannten aliphatischen, cycloaliphatischen, araliphatischen und vorzugsweise die aromatischen mehrwertigen Isocyanate in Frage. Die organischen Di- oder Polyisocyanate können gegebenenfalls modifiziert sein.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z. B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- oder Polyisocyanate können einzeln oder in Form ihrer Mischungen eingesetzt werden.

Bevorzugte Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch modifizierte mehrwertige Isocyanate, d. h. Produkte, die durch chemische Umsetzung organischer Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Polyisocyanate.

Zur Herstellung der erfindungsgemäßen Polyurethan-Hartschaumstoffe wird ganz besonders bevorzugt Polymer-MDI eingesetzt, z. B. Lupranat® M20 von BASF SE.

Zur Herstellung der erfindungsgemäßen Polyurethan-Hartschaumstoffe werden die gegebenenfalls modifizierten organischen Di- und/oder Polyisocyanate PI) und die erfindungsgemäße Polyolkomponente P) mit dem zusätzlich zugesetzten physikalischen Treibmittel F) in solchen Mengen zur Umsetzung gebracht, dass der Isocyanatindex 70 bis 300, bevorzugt 90 bis 200, besonders bevorzugt 100 bis 150, beträgt.

Die Polyurethan-Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 10 bis 30 °C, vorzugsweise von 15 bis 30 °C und insbesondere von 15 bis 25 °C, gemischt und in das offene oder, gegebenenfalls unter erhöhtem Druck, in das geschlossene Formwerkzeug eingebracht. Die Vermischung erfolgt üblicherweise im Hochdruckmischkopf. Die Formwerkzeugtemperatur beträgt zweckmäßigerweise 30 bis 70 °C, vorzugsweise 40 bis 60 °C.

Die Erfindung betrifft ebenfalls Polyurethan-Hartschaumstoff erhältlich durch das erfindungsgemäße Verfahren.

Die Erfindung betrifft ebenfalls die Verwendung der erfindungsgemäßen Polyolkomponente P) zur Herstellung von Polyurethan-Hartschaumstoffen.

Die Erfindung betrifft ebenfalls die Verwendung des durch das erfindungsgemäße Verfahren hergestellten Polyurethan-Hartschaumstoffes für Dämm- und Kühlanwendungen, insbesondere in Kühlschränken, kommerziellen Kältegeräten, Gefriertruhen, Warmwasserspeichern und Boilern.

Vorzugsweise sind alle vorstehend aufgeführten Ausführungsformen und bevorzugten Ausführungsformen frei miteinander kombinierbar, sofern der Kontext nicht eindeutig dagegen spricht.

Vorzugsweise umfassen die Ausdrücke "umfassend" und "umfasst" auch die Ausdrücke "bestehend", "bestehend aus" oder "besteht aus".

Die Erfindung wird durch die nachstehenden Beispiele näher erläutert.

Beispiele

Messmethoden:

Messung der Hydroxylzahl:
Die Hydroxylzahlen werden nach der DIN 53240 (1971-12) bestimmt.

Viskositätsbestimmung:

Die Viskosität der Polyole wird, wenn nicht anders angegeben, bei 25 °C gemäß DIN EN ISO 3219 (1994) mit einem Haake Viscotester 550 mit Platte/Kegel-Messgeometrie (PK100) unter Verwendung des Kegels PK 1 1° (Durchmesser: 28 mm; Kegelwinkel: 1°) bei einer Scherrate von 40 1/s bestimmt.

Bestimmung der Pentanlöslichkeit:

Eine gute Pentanlöslichkeit der Polylkomponente über einen großen Temperaturbereich startend bei einer möglichst niedrigen Temperatur (> 5°C) ist in der verarbeitenden Industrie von großer Bedeutung: Dadurch kann eine gute Lagerstabilität der Polyolkomponente bei unterschiedlichen klimatischen Bedingungen gewährleistet werden. Zur Beurteilung der Pentanlöslichkeit (als Stabilität der Polyolkomponente PK mit Treibmittel) wird die Polyolkomponente P) mit der in den Beispielen angegebenen Menge an physikalischem Treibmittel F) vermischt (Vollrath-Rührer, 1500 Umdrehungen/Min., 2 Min. Rührzeit) in ein Schraubglas gegeben und verschlossen. Nach vollständigem Entweichen von Gasbläschen wird die Klarheit der Probe zunächst bei Raumtemperatur geprüft. Ist die Probe klar, wird sie anschließend im Wasserbad in Schritten von 1 °C abgekühlt und 30 Min. nach Erreichen der eingestellten Temperatur auf Klarheit geprüft.

Bestimmung des Entformungsverhaltens:

Ein gutes Entformungsverhalten ist bei der verarbeitenden Industrie von höchstem Interesse, da somit die Verarbeitungszeiten bezogen auf den eingesetzten Schaum sinken. Die Produktivität steigt somit und die Kosten können daher auf diese Weise reduziert werden. Gutes Entformungsverhalten wird durch die Nachexpansion des ausgehärteten PU-Hartschaums determiniert. Eine möglichst geringe Nachexpansion innerhalb einer möglichst kurzen Aushärtzeit der eingesetzten Komponenten innerhalb der Form ist wünschenswert, da so eine schnellere Entformung möglich wird. Die Bestimmung des Entformungsverhaltens erfolgt durch Messung des Nachtriebes von Schaumkörpern, die mit einer Kastenform der Dimension 700 x 400 x 90 mm bei einer Werkzeugtemperatur von 45±2 °C in Abhängigkeit der Entformzeit und der Überfüllung (OP = Overpacking, entspricht dem Verhältnis der Gesamtrohdichte/Mindestfülldichte und beschreibt die prozentual mehr eingebrachte Menge an Ausgangsstoffen, die eigentlich nötig wäre um die Form gerade mit einem PU-Hartschaum zu füllen) hergestellt werden. Der Nachtrieb wird durch Höhenmessung der Schaumquader nach 24 h ermittelt.

Mindestfülldichte für ein Bauteil / Frei geschäumte Dichte:

Für die Bestimmung der Mindestfülldichte wird so viel Polyurethanreaktionsgemisch in eine Form der Maße 2000 x 200 x 50 mm bei einer Werkzeugtemperatur von 45±2 °C eingebracht, dass der Schaum die Form gerade ausfüllt ohne das Ende der Form zu berühren. Die Länge des Fließweges wird gemessen und die Mindestfülldichte berechnet nach MFD=(m*L/(V*s)), wobei m=Masse, L=Länge der Form, s=Fließweg, und V=Volumen der Form. Die freigeschäumte Dichte wird durch Aufschäumen des Polyurethanreaktionsgemisches in einen Plastiksack bei Raumtemperatur bestimmt. Die Dichte wird an einem Würfel, der aus der Mitte des ausgeschäumten Plastiksacks entnommen worden ist, bestimmt.

Bestimmung der Fließfähigkeit:

Die Fließfähigkeit wird als Fließfaktor = (Mindestfülldichte/Frei geschäumte Dichte) angegeben.

Wärmeleitfähigkeit:

Die Wärmeleitfähigkeit wird mit einem Taurus TCA300 DTX Gerät bei einer Mitteltemperatur von 10 °C bestimmt. Zur Herstellung der Prüfkörper wird das Polyurethan-Reaktionsgemisch in eine Form der Maße 2000 x 200 x 50 mm eingebracht (15 % Überfüllung) und nach 5 Min. entformt. Nach Lagerung für 24 Stunden bei Normklima werden mehrere Schaumquader (Position 10, 900 und 1700 mm bezogen auf Lanzenanfang) der Dimension 200 x 200 x 50 mm aus der Mitte geschnitten. Anschließend wird die Ober- und Unterseite entfernt, so dass Prüfkörper der Dimension 200 x 200 x 30 mm erhalten werden.

Druckfestigkeit:

Die Druckfestigkeit wird bestimmt nach DIN ISO 844 EN DE (2014-11).

Herstellung der Polyetherpolyole A)

Polyetherpolyol A (erfindungsgemäß)

Ausgangsstoffe:

Insbesondere bei festen Starterverbindungen wie z. B. Saccharose, sind am Anfang des Prozesses nur langsame Dosierraten möglich, da sich das Alkylenoxid nur schlecht in der Reaktionsmischung löst und zu langsamen Reaktionsgeschwindigkeiten führt. Zudem sorgt die hohe Viskosität, die bei Verwendung von festen Startern in der Startermischung entsteht, für eine schlechtere Wärmeabfuhr. Das kann zu lokalen Überhitzungen führen, was einen negativen Einfluss auf die Produktqualität hat. Zudem beschleunigt die hohe Viskosität die Abnutzung der Pumpen und Wärmetauscher. Durch Zugabe eines Polyetherpolyols zur Startermischung können die negativen Effekte verringert werden. Das ist z. B. in EP 2542612 beschrieben. Bei einigen der beschriebenen Versuche wurden die Mischungen der Starterverbindungen daher mit Polyetherolen versetzt, um die Viskosität der Startmischung zu reduzieren und eine bessere Prozessführung zu ermöglichen. Es werden zwei Polyetherole eingesetzt: Polyol H ist ein Imidazol katalysiertes Saccharose/Glycerin-gestartetes Propoxylat mit einer Molmasse von 488 g/mol und einer Funktionalität von 4,3. Polyol I ist ein Imidazol katalysiertes Saccharose/Glycerin-gestartet mit einem Molgewicht von 639 g/mol und einer Funktionalität von 5,1.

Bei der Verwendung von Toluoldiamin (TDA) können alle Isomere allein oder in beliebigen Gemischen miteinander eingesetzt werden. Insbesondere können 2,4-TDA, 2,6-TDA, Gemische aus 2,4-TDA und 2,6-TDA, 2,3-TDA, 3,4 TDA, Gemische aus 3,4-TDA und 2,3-TDA, sowie Gemische aus allen genannten Isomeren eingesetzt werden. 2,3-TDA und 3,4-TDA werden häufig auch als ortho-TDA oder als vicinales TDA bezeichnet. Das TDA kann ausschließlich vicinales TDA sein. In einer besonders bevorzugten Ausführungsform des erfindungsgemäßen Verfahrens besteht das TDA zu > 85 %, bevorzugt > 90 %, besonders bevorzugt > 95 % und insbesondere zu mindestens 99 Gew.-% jeweils bezogen auf das Gewicht des TDA aus vicinalem TDA.

Polyetherol I Zusammensetzung in Gewichtsprozent:

Saccharose 25 %, Glycerin 7,6 %, Propylenoxid 67,4 %
Polyetherol H Zusammensetzung in Gewichtsprozent:
Saccharose 20,3 %, Glycerin 13,3 %, Propylenoxid 66,4 %

Herstellung der Polyetherpolyole A)

Polyetherpolyol A (erfindungsgemäß):

Ein 900 l Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde mit 12,3 kg Glycerin, 90,70 kg Saccharose, 0,34 kg festem Imidazol und 29,00 kg des Polyols H befüllt. Anschließend wurde mehrmals inertisiert (unter Rühren) und die Temperatur wurde auf 120 °C erhöht. Das Gemisch wurde bei 120 °C mit 256,3 kg Propylenoxid umgesetzt. Die Nachreaktion von 2 Stunden lief bei 120 °C ab. Anschließend wurde die Probe im Stickstoffstrom abgestrippt. Es wurden 372 kg Produkt mit folgenden Parametern erhalten:

| | |
|---|---|
| OH-Zahl | 429 mg KOH/g |
| Viskosität (25 °C) | 34600 mPas |

Berechnung Starterfunktionalität:

| | |
|---|---|
| Glycerin (Funktionalität 3): | 12300 g / 92,09 g/mol = 132,4 mol |
| Saccharose (Funktionalität 8): | 90700 g / 342,3 g/mol = 246,97 mol |
| Imidazol (Funktionalität 1): | 340 g / 68,08 g/mol = 5,0 mol |
| Polyol H (Funktionalität 4,3): | 29000 g / 488 g/mol = 59,4 mol |
| Starterfunktionalität: | (132,4 mol*3 + 246,97 mol*8 + 5,0 mol*1 + 59,4 mol*4,3)/(132,4 mol + mol) = 6,0 246,97 mol + 5,0 mol + 59,40 |

Zusammensetzung (Massenprozent):

| | |
|---|---|
| Saccharose | 23,3 % |
| Glycerin | 3,2 % |
| Polyol H | 7,5 % |
| Propylenoxid | 66,0 % |

Polyetherpolyol A1 (erfindungsgemäß):

Der unter Polyetherpolyol A beschriebenen Reaktor wurde mit 6,31 kg Glycerin, 5,91 kg Dipropylenglykol, 34,6 kg Polyol H und 104,0 kg Saccharose und 0,340 kg festem Imidazol befüll und mehrmals intertisiert. Das Gemisch wurde bei 120 °C mit 248,5 kg Propylenoxid umgesetzt. Die Nachreaktion von 3 Stunden lief bei 120 °C ab. Anschließend wurde die Probe im Stickstoffstrom abgestrippt. Es wurden 369 kg Produkt mit folgenden Parametern erhalten:

| | |
|---|---|
| OH-Zahl | 442 mg KOH/g |
| Viskosität | 40900 mPas |

Berechnung Funktionalität:

| | |
|---|---|
| Glycerin (Funktionalität 3): | 6310 g / 92,09 g/mol = 67,9 mol |
| Saccharose (Funktionalität 8): | 104000 g / 342,3 g/mol = 303,8 mol |
| Imidazol (Funktionalität 1): | 340 g / 68,08 g/mol = 5,0 mol |
| Polyol H (Funktionalität 4,3): | 34600 g / 488 g/mol = 70,9 mol |
| Dipropylenglykol (Funktionalität 2): | 5910 g / 134,2 g/mol = 44,1 mol |
| Funktionalität: | (67,9 mol*3 + 303,8 mol*8 + 5,0 mol*1 + 70,9 mol*4,3 + 44,1 mol*2)/(67,9 mol + 303,8 mol + 5,0 mol + 70,9 mol + 44,1 mol) = 6,17 |

Zusammensetzung (Massenprozent):

| | |
|---|---|
| Saccharose | 26,0 % |
| Glycerin | 1,6 % |
| Polyol H | 8,7 % |
| Dipropylenglykol | 1,5 % |
| Propylenoxid | 62,2 % |

Polyetherpolyol A2 (erfindungsgemäß):

Der unter Polyetherpolyol A beschriebenen Reaktor wurde mit 10,50 kg Glycerin, 32,09 kg Polyol I und 100,26 kg Saccharose und 0,503 kg festem Imidazol befüllt und mehrmals inertisiert. Das Gemisch wurde bei 120 °C mit 259,31 kg Propylenoxid umgesetzt. Die Nachreaktion von 3 Stunden lief bei 120°C ab. Anschließend wurde die Probe im Stickstoffstrom abgestrippt. Es wurden 379 kg Produkt mit folgenden Parametern erhalten:

| | |
|---|---|
| OH-Zahl | 413 mg KOH/g |
| Viskosität | 28800 mPas |

Berechnung Funktionalität:

| Glycerin (Funktionalität 3): | 10500 g / 92,09 g/mol = 113,0 mol |
|---|---|
| Saccharose (Funktionalität 8): | 100260 g / 342,3 g/mol = 292,9 mol |
| Imidazol (Funktionalität 1): | 503 g / 68,08 g/mol = 7,4 mol |
| Polyol I (Funktionalität 5,1): | 32090 g / 639 g/mol = 50,2 mol |
| Funktionalität: | (113,0 mol*3 + 292,9 mol*8 + 7,4 mol*1 + 50,2 mol*5,1)/(113,0 mol + 292,9 mol + 7,4 mol + 50,2 mol) = 6,36 |

Zusammensetzung (Massenprozent):

| Saccharose | 24,9 % |
|---|---|
| Polyol I | 8,0 % |
| Glycerin | 2,6 % |
| Propylenoxid | 64,5 % |

Polyetherpolyol AV1 (nicht erfindungsgemäß):

Der unter Polyetherpolyol A beschriebenen Reaktor wurde mit 58,2 kg Glycerin, 6,0 kg Dimethylethanolamin, 191,6 kg Saccharose befüllt und mehrmals inertisiert. Das Gemisch wurde bei 100 °C mit 195,0 kg Propylenoxid umgesetzt. Dann wurde die Temperatur auf 120 °C erhöht und das Produkt wurde mit weiteren 352,7 kg Propylenoxid umgesetzt. Die Nachreaktion von 3 Stunden lief bei 120 °C ab. Das noch vorhandene Propylenoxid wurde im Stickstoffstrom abgestrippt. Es wurden 770 kg Produkt mit folgenden Parametern erhalten:

| OH-Zahl | 455 mg KOH/g |
|---|---|
| Viskosität | 14861 mPas |

Berechnung Funktionalität:

| Glycerin (Funktionalität 3): | 58200 g / 92,09 g/mol = 626,48 mol |
|---|---|
| Saccharose (Funktionalität 8): | 191600 g / 342,3 g/mol = 559,74 mol |
| Dimethylethanolamin (Funktionalität 1): | 6000 g / 89,14 g/mol = 67,31 mol |
| Funktionalität: | (626,48 mol*3 + 559,74 mol*8 + 67,31 mol*1)/(626,48 mol + 559,74 mol + 67,31 mol) = 5,12 |

Polyetherpolyol AV2 (nicht erfindungsgemäß):

Der unter Polyetherpolyol A beschriebenen Reaktor wurde mit 8,60 kg Glycerin, 17,25 kg Polyol H, 113,15 kg Saccharose und 0,434 kg reinem Imidazol befüllt und mehrmals inertisiert. Das Gemisch wurde bei 120 °C mit 261,43 kg Propylenoxid umgesetzt. Die Nachreaktion von 3 Stunden lief bei 120 °C ab Anschließend wurde die Probe im Stickstoffstrom abgestrippt. Es wurden 372 kg Produkt mit folgenden Parametern erhalten:

| OH-Zahl | 457 mg KOH/g |
|---|---|
| Viskosität | 106000 mPas |

Berechnung Funktionalität:

| Glycerin (Funktionalität 3): | 8600 g / 92,09 g/mol = 92,6 mol |
|---|---|
| Saccharose (Funktionalität 8): | 113150 g / 342,3 g/mol = 330,6 mol |

(fortgesetzt)

| | |
|---|---|
| Imidazol (Funktionalität 1): | 434 g / 68,08 g/mol = 6,4 mol |
| Polyol H (Funktionalität 4,3): | 17250 g / 488 g/mol = 35,3 mol |
| Funktionalität: | (92,6 mol*3 + 330,6 mol*8 + 6,4 mol*1 + 35,3 mol*4,3)/(92,6 mol + 330,6 mol + 6,4 mol + 35,3 mol) = 6,63 |

Polyetherpolyol AV3 (nicht erfindungsgemäß):

Der unter Polyetherpolyol A beschriebenen Reaktor wurde mit 4,933 kg Glycerin, 11,633 kg Polyol H und 118,5 kg Saccharose und 0,433 kg festem Imidazol befüllt und mehrmals inertisiert. Das Gemisch wurde bei 120 °C mit 264,05 kg Propylenoxid umgesetzt. Die Nachreaktion von 3 Stunden lief bei 120 °C ab. Anschließend wurde die Probe im Stickstoffstrom abgestrippt. Es wurden 375 kg Produkt mit folgenden Parametern erhalten:

| | |
|---|---|
| OH-Zahl | 455 mg KOH/g |
| Viskosität | 115000 mPas |

Berechnung Funktionalität:

| | |
|---|---|
| Glycerin (Funktionalität 3): | 4933 g / 92,09 g/mol = 53,10 mol |
| Saccharose (Funktionalität 8): | 118500 g/ 342,3 g/mol = 346,19 mol |
| Imidazol (Funktionalität 1): | 433 g / 68,08 g/mol = 6,4 mol |
| Polyol H (Funktionalität 4,3): | 11633 g / 488 g/mol = 23,84 mol |
| Funktionalität: | (53,10 mol*3 + 346,19 mol*8 + 6,4 mol*1 + 23,84 mol*4,3)/(53,10 mol + 346,19 mol + 6,4 mol + 23,84 mol) = 7,07 |

Herstellung der Polyetherpolyole B) und C)

Polyetherpolyol B:

Ein 900 l Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. 120,2 kg vic-Toluoldiamin wurde in den Reaktor eingefüllt und der Rührer wurde in Betrieb genommen. Anschließend wurde der Reaktor nochmals inertisiert und die Temperatur auf 130 °C erhöht und 160,06 kg Propylenoxid wurden dosiert. Nach einer Abreaktion von 2 h wurden die Temperatur auf 100 °C abgesenkt und 4,29 kg Dimethylethanolamin zugegeben. Das Zwischenprodukt wurde mit weiteren 233,97 kg Propylenoxid umgesetzt. Die Nachreaktion lief für 2 Stunden bei 130 °C. Anschließend wurde die Probe im Stickstoffstrom abgestrippt. Es wurden 508,6 kg Produkt mit folgenden Parametern erhalten:

| | |
|---|---|
| OH-Zahl | 399 mg KOH/g |
| Viskosität | 17016 mPas |

Polyetherpolyol BV1

Ein 600 l Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. 112,4 kg vic-Toluoldiamin wurde in den Reaktor eingefüllt und der Rührer wurde in Betrieb genommen. Anschließend wurde der Reaktor nochmals inertisiert und die Temperatur auf 130 °C erhöht und ein Gemisch von 65,0 kg Propylenoxid und 74,1 kg Ethylenoxid wurde dosiert. Nach einer Abreaktion von 1.5 h wurden die Temperatur auf 100 °C abgesenkt und 3.7 kg Dimethylethanolamin zugegeben. Das Zwischenprodukt wurde mit weiteren 262,7 kg Propylenoxid umgesetzt. Die Nachreaktion lief für 2,5 Stunden bei 100 °C. Es wurden 506,1 kg Produkt mit folgenden Parametern erhalten.

OH-Zahl 405 mg KOH/g
Viskosität 11940mPas

Polyetherpolyol C:

In den unter Polyetherpolyol A beschriebenen Reaktor wurde 32,24 kg vicinales Toluoldiamin gegeben und der Reaktor wurde mehrmals inertisiert. Die Temperatur wurde auf 130 °C erhöht und das Gemisch wurde bei dieser Temperatur mit 32,36 kg einer Mischung aus Ethlyenoxid und Propylenoxid (1,97 kg EO, 30,39 kg PO) versetzt. Nach einer Abreaktion von 2 h wurden 0,652 kg einer 50 % wässrigen KOH Lösung (Massenprozent) zugegeben. Es folgte eine Vakuumphase von 1 h und anschließend wurden bei 130 °C 344,75 kg eines Gemisches von Ethylenoxid und Propylenoxid (20,99 kg Ethylenoxid, 323,76 kg Propylenoxid) zudosiert. Nach einer Abreaktion von 3 h wurde die Probe im Stickstoffstrom abgestrippt. Es wurden 380 kg eines Produktes mit folgenden Parametern erhalten:

OH-Zahl 160 mg KOH/g
Viskosität 650 mPas

Polyetherpolyol C1:

Der unter Polyetherpolyol A beschriebenen Reaktor wurde mit 36,80 kg Glycerin und 3925 g einer 50 % wässrigen KOH Lösung (Massenprozent) befüllt. Anschließend wurde die Temperatur auf 130 °C erhöht und für 2 h eine Startertrocknung bei 10 mbar durchgeführt. Anschließend wurde 361,90 kg Propylenoxid bei 130°C zudosiert. Nach einer Abreaktion von 3 h wurde die Probe im Stickstoffstrom abgestrippt. Es wurden 378 kg eines Produktes mit folgenden Parametern erhalten:

OH-Zahl 172 mg KOH/g
Viskosität 270 mPas

Katalysatormischung D):

Katalysatormischung D) bestehend aus:

Katalysator D1): Dimethylcyclohexylamin
Katalysator D2): Pentamethyldiethylentriamin oder Bis(2-dimethylaminoethyl)ether
Katalysator D3): Tris(dimethylaminopropyl)hexahydro-1,3,5-triazin
Katalysator D4): Dimethylbenzylamin

Stabilisator E):

silikonhaltiger Schaumstabilisator, Tegostab® B8474 und/oder Tegostab® B8491 von Evonik

Isocyanat:

Polymer-MDI mit einem NCO-Gehalt von 31,5 Gew.-% (Lupranat® M20)

Aus den vorgenannten Rohstoffen wurde eine Polyolkomponente (alle Angaben in Gew.-%) hergestellt, der vor dem Verschäumen ein physikalisches Treibmittel zugesetzt wurde. Mittels eines Hochdruck-Puromaten® PU 30/80 IQ (Elastogran GmbH) mit einer Austragsmenge von 250 g/sek wurde die mit dem physikalischen Treibmittel versetzte Polyolkomponente mit der erforderlichen Menge des angegebenen Isocyanats vermischt, so dass ein Isocyanat-Index (wenn nicht anders angegeben) von 119 erreicht wurde.

Die Reaktionsmischung wurde in auf 40 °C temperierte Formwerkzeuge der Abmessungen 2000 mm x 200 mm x 50 mm bzw. 400 mm x 700 mm x 90 mm eingespritzt und dort aufschäumen gelassen. Die Überfüllung betrug 17,5 %, d. h. es wurden 17,5 % mehr Reaktionsmischung eingesetzt, als zum vollständigen Ausschäumen der Form notwendig gewesen wäre.

Tabelle 1 zeigt die Messergebnisse für die jeweilige Zusammensetzung der Polyolkomponente P) (= PK; Angaben in Gew.-%) und die der daraus erhaltenen Schäume. Die Menge des physikalischen Treibmittels (Cyclopentan) ist in Gewichtsteilen angegeben, die 100 Gewichtsteilen der Polyolkomponente zugesetzt werden.

Erfindungsgemäßes Polyol liefert also bessere (also kleinere) Nachexpansion und bessere Druckfestigkeit. Die Polyole AV2, AV3 und BV1 können keine Verwendung finden, weil die Pentanverträglichkeit >20 °C liegen und die Viskositäten >>11000 mPas sind. Eine hinreichende industrielle Verarbeitung bedingt allerdings gute Pentanverträglichkeiten bei mindestens 10°C und für Kabinett-Formulierungen werden max. 11000 mPas bei 20 °C als technisches Limit angesehen. Beispiel 3 und Vergleichsbeispiel 4 zeigen Formulierungen speziell zur Ausschäumung von Türen. Vergleichsbeispiel 5 zeigt die Verwendung von einem vic-Toluoldiamingestartetem Polyol BV1, welches sowohl Ethylenoxid als auch Propylenoxid-Einheiten aufweist. Aus der Tabelle 1 ist schließlich ersichtlich, dass das erfindungsgemäße Polyol (Polyolkomponente P) eine bessere Nachexpansion (also einen geringeren Nachtrieb der ausghärteten PU-Hartschäume nach 24h) aufweist und zu besseren Druckfestigkeiten führt. Zudem ist aus Vergleichsbeispiel 5 auch ersichtlich, dass die Verwendung eines bestimmten Funktionalitätsbereichs von Polyol A in Kombination mit Polyol B zu den gewünschten Eigenschaften führt. Wenn nämlich Polyol A mit einem analogen Polyol BV1 kombiniert wird, welches sowohl Ethylenoxid als auch Propylenoxid-Einheiten aufweist, dann kann kein verbessertes Entformverhalten erzielt werden.

Tabelle 1

| | Beispiel 1 | Beispiel 2 | Vergleichsbeispiel 1 | Vergleichs beispiel 2 | Vergleichs beispiel 3 | Beispiel 3 | Vergleichs beispiel 4 | Vergleichs beispiel 5 |
|---|---|---|---|---|---|---|---|---|
| Polyol A | 56 | 0 | 0 | 0 | 0 | 0 | 0 | 56 |
| Polyol A1 | 0 | 56 | 0 | 0 | 0 | 0 | 0 | 0 |
| Polyol A2 | 0 | 0 | 0 | 0 | 0 | 40,9 | 0 | 0 |
| Polyol AV1 | 0 | 0 | 56 | 0 | 0 | 0 | 40,9 | 0 |
| Polyol AV2 | 0 | 0 | 0 | 56 | 0 | 0 | 0 | 0 |
| Polyol AV3 | 0 | 0 | 0 | 0 | 56 | 0 | 0 | 0 |
| Polyol B | 24 | 24 | 24 | 24 | 24 | 47,5 | 47,5 | 0 |
| Polyol BV1 | 0 | 0 | 0 | 0 | 0 | 0 | 0 | 24 |
| Polyol C | 12 | 12 | 12 | 12 | 12 | 0 | 0 | 12 |
| Polyol C1 | 0 | 0 | 0 | 0 | 0 | 4,7 | 4,7 | 0 |
| DPG | 0,9 | 0,9 | 0,9 | 0,9 | 0,9 | 0 | 0 | 0,9 |
| Stabilisator | 2,5 | 2,5 | 2,5 | 2,5 | 2,5 | 2,8 | 2,8 | 2,5 |
| H2O | 2,5 | 2,5 | 2,5 | 2,5 | 2,5 | 2,0 | 2,0 | 2,5 |
| Katalysatormischung | 2,1 | 2,1 | 2,1 | 2,1 | 2,1 | 2,1 | 2,1 | 2,1 |
| Summe | 100 | 100 | 100 | 100 | 100 | 100 | 100 | 100 |
| Cyclopentan 95 | 13,5 | 13,5 | 13,5 | 13,5 | 13,5 | 15,8 | 15,8 | 13,5 |
| NCO-Index | 119 | 119 | 119 | 119 | 119 | 117 | 117 | 119 |
| Labordaten | | | | | | | | |
| Abbindezeit [s] | 57 | 57 | 58 | 56 | 56 | 54 | 54 | 58 |
| Frei geschäumte Dichte [g/L] | 27,5 | 27,3 | 27,1 | 26,8 | 26,9 | 28,5 | 28,6 | 27,0 |
| PK-Stabilität mit Cyclopentan [°C] | < 5 | < 5 | < 5 | > 20 | > 20 | < 5 | <5 | >20 |
| Viskosität bei 20°C [mPas] | 10500 | 9900 | 8700 | 15000 | 16700 | 16700 | 15200 | 8500 |
| Maschinendaten | | | | | | | | |
| Abbindezeit [s] | 41 | 44 | 42 | n.d. | n.d. | 35 | 35 | 43 |
| Frei geschäumte Dichte [g/L] | 22,9 | 22,6 | 22,6 | n.d. | n.d. | 22,9 | 23,2 | 22,5 |

(fortgesetzt)

| Maschinendaten | | | | | | | | |
|---|---|---|---|---|---|---|---|---|
| Nachexpansion [mm] bei 17,5% Überfüllung | | | | | | | | |
| 3,5 min* | n.d. | n.d. | n.d. | n.d. | n.d. | 3,9 | 5,2 | n.d. |
| 3 min | 3,6 | 4,1 | 4,1 | n.d. | n.d. | n.d. | n.d. | 4,6 |
| 4 min | 2,1 | 2,4 | 2,5 | n.d. | n.d. | n.d. | n.d | 2,8 |
| Druckfestigkeit [N/mm$^2$] bei 34 g/l | 0,157 | 0,156 | 0,155 | n.d. | n.d. | 0,120 | 0,124 | 0,150 |
| * Abweichend zum oben angegebenen Verfahren zur Bestimmung der Entformung wurden diese Werte bei einem Overpacking von 25 % bestimmt<br>n.d.: nicht bestimmt | | | | | | | | |

**Patentansprüche**

1.  Polyolkomponente P) umfassend:

    a) mindestens ein Polyetherpolyol A) mit einer OH-Zahl im Bereich von 300 bis 500 mg KOH/g, umfassend Einheiten basierend auf Gemischen mit einer Funktionalität im Bereich von 5,7 bis 6,4 aus den Monomeren ai), aii) und aiii) jeweils ausgewählt aus den Gruppen bestehend aus

    ai) Saccharose,
    aii) Monopropylenglykol, Diethylenglykol, Triethylenglykol, Dipropylenglykol, Glycerin oder Mischungen daraus,
    aiii) ausschließlich Propylenoxid als Alkylenoxid,

    b) mindestens ein Polyetherpolyol B) mit einer OH-Zahl im Bereich von 300 bis 500 mg KOH/g, umfassend Einheiten basierend auf Gemischen mit einer Funktionalität im Bereich von 3,0 bis 5,0 aus den Monomeren bi) und bii) jeweils ausgewählt aus den Gruppen bestehend aus

    bi) 2,3-, 3,4-, 2,4-, 2,5-, 2,6-Toluylendiamin oder Mischungen daraus,
    bii) ausschließlich Propylenoxid als Alkylenoxid,

    c) mindestens ein Polyetherpolyol C) mit einer OH-Zahl im Bereich von 100 bis 290 mg KOH/g, umfassend Einheiten basierend auf Gemischen mit einer Funktionalität im Bereich von 3,0 bis 5,0 oder 2,8 bis 3,0 aus den Monomeren ci) und cii) jeweils ausgewählt aus den Gruppen bestehend aus

    ci) Aminen, umfassend Ethylendiamin, 1,3-Propylendiamin, 1,3-, 1,4-Butylendiamin, 1,2-, 1,3-, 1,4-, 1,5-, 1,6-Hexamethylendiamin, Phenylendiamine, 2,3-, 3,4-, 2,4-, 2,5-, 2,6-Toluylendiamin und 4,4'-, 2,4'-, 2,2'-Diaminodiphenylmethan oder Mischungen daraus, Polyolen, umfassend Glycerin, Trimethylolpropan, Monopropylenglykol, Diethylenglykol, Triethylenglykol, Dipropylenglykol (2,2'-Oxydi-1-propanol, 1,1'-Oxydi-2-propanol, 2-(2-Hydroxypropoxy)-1-propanol) oder Mischungen daraus,
    cii) Ethylenoxid, Propylenoxid, Butylenoxid oder Mischungen daraus als Alkylenoxiden.

2.  Polyolkomponente P) gemäß Anspruch 1, umfassend:

    a) mindestens ein Polyetherpolyol A) mit einer OH-Zahl im Bereich von 300 bis 500 mg KOH/g, umfassend die Einheiten basierend auf Gemischen mit einer Funktionalität im Bereich von 5,7 bis 6,1 aus den Monomeren ai), aii) und aiii) jeweils ausgewählt aus den Gruppen bestehend aus

    ai) Saccharose,
    aii) Monopropylenglykol, Diethylenglykol, Triethylenglykol, Dipropylenglykol, Glycerin oder Mischungen daraus,
    aiii) ausschließlich Propylenoxid als Alkylenoxid,

    b) mindestens ein Polyetherpolyol B) mit einer OH-Zahl im Bereich von 300 bis 500 mg KOH/g, umfassend Einheiten basierend auf Gemischen mit einer Funktionalität im Bereich von 3,0 bis 5,0 aus den Monomeren bi) und bii) jeweils ausgewählt aus den Gruppen bestehend aus

    bi) 2,3-, 3,4-, 2,4-, 2,5-, 2,6-Toluylendiamin oder Mischungen daraus,
    bii) ausschließlich Propylenoxid als Alkylenoxid,

    oder Mischungen aus bi) und bii),
    c) mindestens ein Polyetherpolyol C) mit einer OH-Zahl im Bereich von 100 bis 290 mg KOH/g, umfassend Einheiten basierend auf Gemischen mit einer Funktionalität im Bereich von 3,0 bis 5,0 oder 2,8 bis 3,0 aus den Monomeren ci) und cii) jeweils ausgewählt aus den Gruppen bestehend aus

    ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
    cii) Ethylenoxid und/oder Propylenoxid als Alkylenoxiden,

3. Polyolkomponente P) gemäß Anspruch 1 oder 2, umfassend:

a) mindestens ein Polyetherpolyol A) mit einer OH-Zahl im Bereich von 300 bis 500 mg KOH/g, bestehend aus den Einheiten basierend auf Gemischen mit einer Funktionalität im Bereich von 5,7 bis 6,1 aus den Monomeren ai), aii) und aiii) jeweils ausgewählt aus den Gruppen bestehend aus

ai) Saccharose,
aii) Monopropylenglykol, Diethylenglykol, Triethylenglykol, Dipropylenglykol, Glycerin oder Mischungen daraus,
aiii) ausschließlich Propylenoxid als Alkylenoxid,

b) mindestens ein Polyetherpolyol B) mit einer OH-Zahl im Bereich von 300 bis 500 mg KOH/g, umfassend Einheiten basierend auf Gemischen mit einer Funktionalität im Bereich von 3,0 bis 5,0 aus den Monomeren bi) und bii) jeweils ausgewählt aus der Gruppe bestehend aus

bi) 2,3-, 3,4-, 2,4-, 2,5-, 2,6-Toluylendiamin oder Mischungen daraus,
bii) ausschließlich Propylenoxid als Alkylenoxid,

c) mindestens ein Polyetherpolyol C) mit einer OH-Zahl im Bereich von 100 bis 290 mg KOH/g, umfassend Einheiten basierend auf Gemischen mit einer Funktionalität im Bereich von 3,0 bis 5,0 oder 2,8 bis 3,0 aus den Monomeren ci) und cii) jeweils ausgewählt aus den Gruppen bestehend aus

ci) 2,3-, 3,4-, 2,4-, 2,5-, 2,6-Toluylendiamin oder Mischungen daraus, Monopropylenglykol, Diethylenglykol, Triethylenglykol, Dipropylenglykol, Glycerin oder Mischungen daraus,
cii) Ethylenoxid und/oder Propylenoxid als Alkylenoxiden.

4. Verfahren zur Herstellung von Polyurethan-Hartschaumstoffen durch Umsetzung von:

I) organischen oder modifizierten organischen Di- oder Polyisocyanaten PI) oder Gemischen daraus mit
II) einer Polyolkomponente P) gemäß einem der Ansprüche 1 bis 3, der zuvor ein Treibmittel F) zugesetzt wurde.

5. Polyurethan-Hartschaumstoff erhältlich durch das Verfahren gemäß Anspruch 4.

6. Verwendung der Polyolkomponente P) gemäß einem der Ansprüche 1 bis 3 zur Herstellung von Polyurethan-Hartschaumstoffen.

7. Verwendung des durch das Verfahren gemäß Anspruch 4 hergestellten Polyurethan-Hartschaumstoffes für Dämm- und Kühlanwendungen.

**Claims**

1. A polyol component P) comprising:

a) at least one polyether polyol A) having an OH number in the range from 300 to 500 mg KOH/g, comprising units based on mixtures having a functionality in the range from 5.7 to 6.4 of the monomers ai), aii) and aiii), respectively selected from the groups consisting of

ai) sucrose,
aii) monopropylene glycol, diethylene glycol, triethylene glycol, dipropylene glycol, glycerol or mixtures thereof,
aiii) exclusively propylene oxide as alkylene oxide,

b) at least one polyether polyol B) having an OH number in the range from 300 to 500 mg KOH/g, comprising units based on mixtures having a functionality of 3.0 to 5.0 of the monomers bi) and bii), respectively selected from the group consisting of

bi) 2,3-, 3,4-, 2,4-, 2,5-, 2,6-tolylenediamine or mixtures thereof,

27

bii) exclusively propylene oxide as alkylene oxide,

c) at least one polyether polyol C) having an OH number in the range from 100 to 290 mg KOH/g, comprising units based on mixtures having a functionality in the range from 3.0 to 5.0 or 2.8 to 3.0 of the monomers ci) and cii), respectively selected from the groups consisting of

ci) amines comprising ethylenediamine, 1,3-propylenediamine, 1,3-, 1,4-butylenediamine, 1,2-, 1,3-, 1,4-, 1,5-, 1,6-hexamethylenediamine, phenylenediamines, 2,3-, 3,4-, 2,4-, 2,5-, 2,6-tolylenediamine and 4,4'-, 2,4'-, 2,2'-diaminodiphenylmethane or mixtures thereof, polyols comprising glycerol, trimethylolpropane, monopropylene glycol, diethylene glycol, triethylene glycol, dipropylene glycol (2,2'-oxydi-1-propanol, 1,1'-oxydi-2-propanol, 2-(2-hydroxypropoxy)-1-propanol) or mixtures thereof,
cii) ethylene oxide, propylene oxide, butylene oxide or mixtures thereof as alkylene oxides.

2. The polyol component P) according to claim 1, comprising:

a) at least one polyether polyol A) having an OH number in the range from 300 to 500 mg KOH/g, comprising units based on mixtures having a functionality in the range from 5.7 to 6.1 of the monomers ai), aii) and aiii), respectively selected from the groups consisting of

ai) sucrose,
aii) monopropylene glycol, diethylene glycol, triethylene glycol, dipropylene glycol, glycerol or mixtures thereof,
aiii) exclusively propylene oxide as alkylene oxide,

b) at least one polyether polyol B) having an OH number in the range from 300 to 500 mg KOH/g, comprising units based on mixtures having a functionality of 3.0 to 5.0 of the monomers bi) and bii), respectively selected from the group consisting of

bi) 2,3-, 3,4-, 2,4-, 2,5-, 2,6-tolylenediamine or mixtures thereof,
bii) exclusively propylene oxide as alkylene oxide, or mixtures of bi) and bii),

c) at least one polyether polyol C) having an OH number in the range from 100 to 290 mg KOH/g, comprising units based on mixtures having a functionality in the range from 3.0 to 5.0 or 2.8 to 3.0 of the monomers ci) and cii), respectively selected from the groups consisting of

ci) 2,3-, 3,4-, 2,4-, 2,5-, 2,6-tolylenediamine or mixtures thereof, monopropylene glycol, diethylene glycol, triethylene glycol, dipropylene glycol, glycerol or mixtures thereof,
cii) ethylene oxide and/or propylene oxide as alkylene oxides.

3. The polyol component P) according to claim 1 or 2, comprising:

a) at least one polyether polyol A) having an OH number in the range from 300 to 500 mg KOH/g, consisting of units based on mixtures having a functionality in the range from 5.7 to 6.1 of the monomers ai), aii) and aiii), respectively selected from the groups consisting of

ai) sucrose,
aii) monopropylene glycol, diethylene glycol, triethylene glycol, dipropylene glycol, glycerol or mixtures thereof,
aiii) exclusively propylene oxide as alkylene oxide,

b) at least one polyether polyol B) having an OH number in the range from 300 to 500 mg KOH/g, comprising units based on mixtures having a functionality of 3.0 to 5.0 of the monomers bi) and bii), respectively selected from the group consisting of

bi) 2,3-, 3,4-, 2,4-, 2,5-, 2,6-tolylenediamine or mixtures thereof,
bii) exclusively propylene oxide as alkylene oxide,

c) at least one polyether polyol C) having an OH number in the range from 100 to 290 mg KOH/g, comprising units based on mixtures having a functionality in the range from 3.0 to 5.0 or 2.8 to 3.0 of the monomers ci) and cii), respectively selected from the groups consisting of

ci) 2,3-, 3,4-, 2,4-, 2,5-, 2,6-tolylenediamine or mixtures thereof, monopropylene glycol, diethylene glycol, triethylene glycol, dipropylene glycol, glycerol or mixtures thereof,
cii) ethylene oxide and/or propylene oxide as alkylene oxides.

4. A process for preparing rigid polyurethane foams by reaction of:

I) organic or modified organic di- or polyisocyanates PI) or mixtures thereof with
II) a polyol component P) according to any one of claims 1 to 3 whereto a blowing agent F) was added.

5. A rigid polyurethane foam obtainable by the process according to claim 4.

6. The use of the polyol component P) according to any one of claims 1 to 3 in the manufacture of rigid polyurethane foams.

7. The use of the rigid polyurethane foam obtained by the process according to claim 4 for insulation and refrigeration applications.

**Revendications**

1. Composant polyol P) comprenant :

a) au moins un polyéther-polyol A) ayant un indice OH dans la plage allant de 300 à 500 mg de KOH/g, comprenant des unités à base de mélanges ayant une fonctionnalité dans la plage allant de 5,7 à 6,4 des monomères ai), aii) et aiii) respectivement choisis dans les groupes constitués par :

ai) le saccharose,
aii) le monopropylène glycol, le diéthylène glycol, le triéthylène glycol, le dipropylène glycol, la glycérine ou des mélanges de ceux-ci,
aiii) exclusivement l'oxyde de propylène en tant qu'oxyde d'alkylène,

b) au moins un polyéther-polyol B) ayant un indice OH dans la plage allant de 300 à 500 mg de KOH/g, comprenant des unités à base de mélanges ayant une fonctionnalité dans la plage allant de 3,0 à 5,0 des monomères bi) et bii) respectivement choisis dans les groupes constitués par :

bi) la 2,3-, 3,4-, 2,4-, 2,5-, 2,6-toluylène-diamine ou des mélanges de celles-ci,
bii) exclusivement l'oxyde de propylène en tant qu'oxyde d'alkylène,

c) au moins un polyéther-polyol C) ayant un indice OH dans la plage allant de 100 à 290 mg de KOH/g, comprenant des unités à base de mélanges ayant une fonctionnalité dans la plage allant de 3,0 à 5,0 ou de 2,8 à 3,0 des monomères ci) et cii) respectivement choisis dans les groupes constitués par :

ci) les amines, comprenant l'éthylène-diamine, la 1,3-propylène-diamine, la 1,3-, 1,4-butylène-diamine, la 1,2-, 1,3-, 1,4-, 1,5-, 1,6-hexaméthylène-diamine, les phénylène-diamines, la 2,3-, 3,4-, 2,4-, 2,5-, 2,6-toluylène-diamine et le 4,4'-, 2,4'-, 2,2'-diaminodiphénylméthane ou des mélanges de ceux-ci, les polyols, comprenant la glycérine, le triméthylolpropane, le monopropylène glycol, le diéthylène glycol, le triéthylène glycol, le dipropylène glycol (2,2'-oxydi-1-propanol, 1,1'-oxydi-2-propanol, 2-(2-hydroxypropoxy)-1-propanol) ou des mélanges de ceux-ci,
cii) l'oxyde d'éthylène, l'oxyde de propylène, l'oxyde de butylène ou des mélanges de ceux-ci en tant qu'oxydes d'alkylène.

2. Composant polyol P) selon la revendication 1, comprenant :

a) au moins un polyéther-polyol A) ayant un indice OH dans la plage allant de 300 à 500 mg de KOH/g, comprenant les unités à base de mélanges ayant une fonctionnalité dans la plage allant de 5,7 à 6,1 des monomères ai), aii) et aiii) respectivement choisis dans les groupes constitués par :

> ai) le saccharose,
> aii) le monopropylène glycol, le diéthylène glycol, le triéthylène glycol, le dipropylène glycol, la glycérine ou des mélanges de ceux-ci,
> aiii) exclusivement l'oxyde de propylène en tant qu'oxyde d'alkylène,

b) au moins un polyéther-polyol B) ayant un indice OH dans la plage allant de 300 à 500 mg de KOH/g, comprenant des unités à base de mélanges ayant une fonctionnalité dans la plage allant de 3,0 à 5,0 des monomères bi) et bii) respectivement choisis dans les groupes constitués par :

> bi) la 2,3-, 3,4-, 2,4-, 2,5-, 2,6-toluylène-diamine ou des mélanges de celles-ci,
> bii) exclusivement l'oxyde de propylène en tant qu'oxyde d'alkylène,

ou des mélanges de bi) et bii),

c) au moins un polyéther-polyol C) ayant un indice OH dans la plage allant de 100 à 290 mg de KOH/g, comprenant des unités à base de mélanges ayant une fonctionnalité dans la plage allant de 3,0 à 5,0 ou de 2,8 à 3,0 des monomères ci) et cii) respectivement choisis dans les groupes constitués par :

> ci) la 2,3-, 3,4-, 2,4-, 2,5-, 2,6-toluylène-diamine ou des mélanges de celles-ci, le monopropylène glycol, le diéthylène glycol, le triéthylène glycol, le dipropylène glycol, la glycérine ou des mélanges de ceux-ci,
> cii) l'oxyde d'éthylène et/ou l'oxyde de propylène en tant qu'oxydes d'alkylène.

3. Composant polyol P) selon la revendication 1 ou 2, comprenant :

a) au moins un polyéther-polyol A) ayant un indice OH dans la plage allant de 300 à 500 mg de KOH/g, constitué par les unités à base de mélanges ayant une fonctionnalité dans la plage allant de 5,7 à 6,1 des monomères ai), aii) et aiii) respectivement choisis dans les groupes constitués par :

> ai) le saccharose,
> aii) le monopropylène glycol, le diéthylène glycol, le triéthylène glycol, le dipropylène glycol, la glycérine ou des mélanges de ceux-ci,
> aiii) exclusivement l'oxyde de propylène en tant qu'oxyde d'alkylène,

b) au moins un polyéther-polyol B) ayant un indice OH dans la plage allant de 300 à 500 mg de KOH/g, comprenant des unités à base de mélanges ayant une fonctionnalité dans la plage allant de 3,0 à 5,0 des monomères bi) et bii) respectivement choisis dans les groupes constitués par :

> bi) la 2,3-, 3,4-, 2,4-, 2,5-, 2,6-toluylène-diamine ou des mélanges de celles-ci,
> bii) exclusivement l'oxyde de propylène en tant qu'oxyde d'alkylène,

c) au moins un polyéther-polyol C) ayant un indice OH dans la plage allant de 100 à 290 mg de KOH/g, comprenant des unités à base de mélanges ayant une fonctionnalité dans la plage allant de 3,0 à 5,0 ou de 2,8 à 3,0 des monomères ci) et cii) respectivement choisis dans les groupes constitués par :

> ci) la 2,3-, 3,4-, 2,4-, 2,5-, 2,6-toluylène-diamine ou des mélanges de celles-ci, le monopropylène glycol, le diéthylène glycol, le triéthylène glycol, le dipropylène glycol, la glycérine ou des mélanges de ceux-ci,
> cii) l'oxyde d'éthylène et/ou l'oxyde de propylène en tant qu'oxydes d'alkylène.

4. Procédé de fabrication de mousses dures de polyuréthane par mise en réaction de :

I) des di- ou polyisocyanates PI) organiques ou organiques modifiés ou des mélanges de ceux-ci avec
II) un composant polyol P) selon l'une quelconque des revendications 1 à 3, auquel un agent gonflant F) a été ajouté auparavant.

5. Mousse dure de polyuréthane pouvant être obtenue par le procédé selon la revendication 4.

6. Utilisation du composant polyol P) selon l'une quelconque des revendications 1 à 3 pour la fabrication de mousses dures de polyuréthane.

7. Utilisation de la mousse dure de polyuréthane fabriquée par le procédé selon la revendication 4 pour des applications d'isolation et de réfrigération.

**IN DER BESCHREIBUNG AUFGEFÜHRTE DOKUMENTE**

**In der Beschreibung aufgeführte Patentdokumente**

- EP 1138709 A
- EP 2563833 B1
- WO 2011134866 A2
- EP 2542612 A


**In der Beschreibung aufgeführte Nicht-Patentliteratur**

- Polyurethane. Kunststoffhandbuch. Carl Hanser Verlag, 1966, vol. VII
- High Polymers. **J.H. SAUNDERS ; K.C. FRISCH.** Polyurethanes. Verlag Interscience Publishers, 1962, vol. XVI
- Polyurethane. Kunststoff-Handbuch. Hanser-Verlag, 1966, vol. VII